(19) 

Europäisches
Patentamt
European
Patent Office
Office européen
des brevets

(11) **EP 4 580 225 A1**

(12) **EUROPEAN PATENT APPLICATION**
published in accordance with Art. 153(4) EPC

(43) Date of publication:
**02.07.2025 Bulletin 2025/27**

(21) Application number: **22955951.3**

(22) Date of filing: **22.08.2022**

(51) International Patent Classification (IPC):
**H04W 4/70** (2018.01)    **H04W 72/04** (2023.01)
**H04L 67/12** (2022.01)

(52) Cooperative Patent Classification (CPC):
**H04L 5/0048; H04L 67/12; H04W 4/70;
H04W 72/04; H04W 72/0446**

(86) International application number:
**PCT/CN2022/114029**

(87) International publication number:
**WO 2024/040402 (29.02.2024 Gazette 2024/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **CUI, Shengjiang
Dongguan, Guangdong 523860 (CN)**

(74) Representative: **RGTH
Patentanwälte PartGmbB
Neuer Wall 10
20354 Hamburg (DE)**

(54) **WIRELESS COMMUNICATION METHOD AND DEVICE**

(57) A wireless communication method and a device, the method includes: determining (S210), by a first terminal according to a time domain feature of a transmitting time of a first signal, a target transmission mode of the first signal from a plurality of types of transmission modes; where the plurality types of transmission modes include an active transmission mode and a backscatter mode.

200

A first terminal determines, according to a time domain feature of a transmitting time of a first signal, a target transmission mode of the first signal from a plurality of types of transmission modes; where the plurality of types of transmission modes include an active transmission mode and a backscatter mode — S210

FIG. 6

EP 4 580 225 A1

## Description

### TECHNICAL FIELD

The embodiments of the present application relate to the field of communications, and in particularly, to a wireless communication method and a device.

### BACKGROUND

In some scenarios, a zero-power consumption terminal may not actively transmit a signal, but transmit information by backscattering a carrier signal. In practical applications, some zero-power consumption terminals with powerful capabilities can also transmit information in a way of actively transmitting a signal. Therefore, in a case where the zero-power consumption terminal supports both a backscatter (back scattering) communication mode and an active transmission communication mode, how to transmit a signal is an urgent problem to be solved.

### SUMMARY

The present application provides a wireless communication method and a device, which is conducive to balancing terminal power saving and reliable transmission of signals.

In a first aspect, a wireless communication method is provided. The method includes: determining, by a first terminal according to a time domain feature of a transmitting time of a first signal, a target transmission mode of the first signal from a plurality of types of transmission modes; where the plurality of types of transmission modes include an active transmission mode and a backscatter mode.

In a second aspect, a wireless communication method is provided. The method includes: determining, by a target receiving device according to a time domain feature of a receiving time of a first signal, a target receiving mode of the first signal from a plurality of types of receiving modes; where the plurality of types of receiving modes include a receiving mode corresponding to an active transmission mode and a receiving mode corresponding to a backscatter mode, and the target receiving device is a receiving device of the first signal.

In a third aspect, a terminal device is provided and the terminal device is configured to perform the method in the above first aspect or various implementations thereof.

Specifically, the terminal device includes a functional module for executing the method in the above-mentioned first aspect or various implementations thereof.

In a fourth aspect, a network device is provided, and the network device is configured to perform the method in the above second aspect or various implementations thereof.

Specifically, the network device includes a functional module for executing the method in the above-mentioned second aspect or various implementations thereof.

In a fifth aspect, a terminal device is provided, and the terminal device includes a processor and a memory. The memory is configured to store a computer program, and the processor is configured to invoke and run the computer program stored in the memory to execute the method in the above-mentioned first aspect or various implementations thereof.

In a sixth aspect, a network device is provided, and the network device includes a processor and a memory. The memory is configured to store a computer program, and the processor is configured to invoke and run the computer program stored in the memory to execute the method in the above-mentioned second aspect or various implementations thereof.

In a seventh aspect, a chip is provided, and the chip is configured to implement the method in any one of the first to second aspects in above or various implementations thereof.

Specifically, the chip includes: a processor that is configured to invoke and run a computer program from a memory, to cause a device equipped with the apparatus to perform the method in any one of the first to second aspects in above or various implementations thereof.

In an eighth aspect, a computer-readable storage medium is provided, which is configured to store a computer program. The computer program causes a computer to execute the method in any one of the first to second aspects in above or various implementations thereof.

In a ninth aspect, a computer program product is provided, and the computer program product includes computer program instructions. The computer program instructions cause a computer to execute the method in any one of the first to second aspects in above or various implementations thereof.

In a tenth aspect, a computer program is provided, and the computer program, when executed on a computer, causes the computer to execute the method in any one of the first to second aspects in above or various implementations thereof.

Based on the above technical solutions, when a terminal device is going to transmit a signal, the terminal device selects a target transmission mode according to a time domain feature of a transmitting time of a signal to be transmitted, which is beneficial to balancing terminal power saving and reliable transmission of signals.

## BRIEF DESCRIPTION OF THE DRAWINGS

FIG. 1 is a schematic diagram of a communication system architecture provided in the embodiments of the present application.

FIG. 2 is a schematic diagram of a zero-power consumption communication system according to the implementations of the present application.

FIG. 3 is a schematic diagram illustrating the principle of power harvesting according to the embodiments of the present application.

FIG. 4 is a schematic diagram illustrating the principle of backscatter communication according to the embodiments of the present application.

FIG. 5 is a circuit diagram illustrating the principle of resistor load modulation according to the embodiments of the present application.

FIG. 6 is a schematic diagram of a wireless communication method provided according to the embodiments of the present application.

FIG. 7 is a schematic diagram of a distribution pattern of time domain resources provided in the embodiments of the present application.

FIG. 8 is a schematic diagram of another distribution pattern of time domain resources provided in the embodiments of the present application.

FIG. 9 is a schematic diagram of another distribution pattern of time domain resources provided in the embodiments of the present application.

FIG. 10 is a schematic diagram of a method for determining a target transmission mode of a first signal according to the embodiments of the present application.

FIG. 11 is a schematic diagram of another method for determining the target transmission mode of the first signal according to the embodiments of the present application.

FIG. 12 is a schematic diagram illustrating distribution of a switching time provided in the embodiments of the present application.

FIG. 13 is a schematic diagram illustrating another distribution of the switching time provided in the embodiments of the present application.

FIG. 14 is a schematic diagram illustrating distribution of time windows provided in the embodiments of the present application.

FIG. 15 is a schematic diagram illustrating another distribution of the time windows provided in the embodiments of the present application.

FIG. 16 is a schematic diagram illustrating an application scenario of the embodiments of the present application.

FIG. 17 is a schematic diagram of a wireless communication method provided according to the embodiments of the present application.

FIG. 18 is a schematic block diagram of a terminal device provided according to the embodiments of the present application.

FIG. 19 is a schematic block diagram of a communication device provided according to the embodiments of the present application.

FIG. 20 is a schematic block diagram of another communication device provided according to the embodiments of the present application.

FIG. 21 is a schematic block diagram of a chip provided according to the embodiments of the present application.

FIG. 22 is a schematic block diagram of a communication system provided according to the embodiments of the present application.

## DETAILED DESCRIPTION

Technical solutions in the embodiments of the present application will be described below with reference to the accompanying drawings of the embodiments of the present application. Obviously, the described embodiments are merely some but not all of the embodiments of the present application. All other embodiments obtained based on the embodiments of the present application by those ordinary skilled in the art without paying creative efforts shall fall within the protection scope of the present application.

The technical solutions in the embodiments of the present application may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (NTN) system, a universal mobile telecommunication system (UMTS), a wireless local area network (WLAN) system, a wireless fidelity (WiFi) system, a 5th-generation (5G) communication system, a cellular Internet of Things system, a cellular passive IoT system, and other communication systems.

Generally speaking, the limited number of connections is supported by conventional communication systems and is easy to implement. However, with the development of the communication technology, mobile communication systems will not only support the conventional communication, but also support, for example, device to device (D2D) communication, machine to machine (M2M) communication, machine type communication (MTC), vehicle to vehicle (V2V) communication, or vehicle to everything (V2X) communication; and the embodiments of the present application may be applied to these communication systems.

Optionally, the communication system in the embodiments of the present application may be applied to a carrier aggregation (CA) scenario, a dual connectivity (DC) scenario, or a standalone (SA) networking scenario.

Optionally, the communication system in the embodiments of the present application may be applied to an unlicensed spectrum, and the unlicensed spectrum may be considered as a shared spectrum; or the communication system in the embodiments of the present application may be applied to a licensed spectrum, and the licensed spectrum may be considered as an unshared spectrum.

Various embodiments of the present application are described in combination with a network device and a terminal device. The terminal device may be referred to as a user equipment (UE), an access terminal, a user unit, a user station, a mobile station, a mobile console, a remote station, a remote terminal, a mobile device, a user terminal, a terminal, a wireless communication device, a user agent, or a user apparatus.

In the embodiments of the present application, the network device may be a device used for communicating with a mobile device. The network device may be an access point (AP) in WLAN, a base transceiver station (BTS) in GSM or CDMA, or a base station (NodeB, NB) in WCDMA; or the network device may be an evolutional Node B (eNB or eNodeB) in LTE, a relay station or access point, a network device (e.g., gNB) in a vehicle-mounted device, a wearable device or an NR network, a network device in a cellular Internet of Things, a network device in a cellular passive Internet of Things, a network device in a future evolved public land mobile network (PLMN), or a network device in an NTN network.

As an example but not as a limitation, in the embodiments of the present application, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may be a base station provided on land, water, or other places.

In the embodiments of the present application, the network device may provide services for a cell, and the terminal device communicates with the network device through a transmission resource (e.g., a frequency domain resource, or a spectrum resource) used by the cell. The cell may be a cell corresponding to the network device (e.g., the base station). The cell may belong to a macro base station, or belong to a base station corresponding to small cells. Here, the small cells may include: a metro cell, a micro cell, a pico cell, a femto cell, etc. These small cells have characteristics of small coverage and low transmit power, and are suitable for providing high-rate data transmission services.

The terminal device may be a station (ST) in WLAN, or may be a cellular phone, a cordless phone, a session initiation protocol (SIP) phone, a wireless local loop (WLL) station, a personal digital assistant (PDA) device, a handheld device with a wireless communication function, a computing device or any other processing device connected to a wireless modem, a vehicle-mounted device, a wearable device, a terminal device in a next-generation communication system (such as an NR network), a terminal device in a future evolved public land mobile network (PLMN), a terminal device in a cellular Internet of Things, a terminal device in a cellular passive Internet of Things, or the like.

In the embodiments of the present application, the terminal device may be deployed on land, which includes indoor or outdoor, handheld, wearable or vehicle-mounted; or the terminal device may be deployed on water (e.g., on a ship); or the terminal device may be deployed in the air (e.g., on an airplane, a balloon, a satellite).

In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not as a limitation, in the embodiments of the present application, the terminal device may be a wearable device. The wearable device, which is also referred to as a wearable smart device, is a generic term for devices that are developed by intelligent design on daily wears by using a wearable technology and that can be worn, such as glasses, gloves, watches, clothing, and shoes. The wearable device is a portable device that is worn directly on the body, or integrated into the user's clothing or accessories. The wearable device not only is a hardware device, but also implements powerful functions through software support, data interaction, and cloud interaction. Generalized wearable smart devices include devices that have full functions and large sizes, and may implement complete or partial functions without relying on smart phones, such as smart watches or smart glasses, and devices that focus on a certain kind of application functions only and need to be used in combination with any other device such as smart phones, such as various smart bracelets, and smart jewelries for monitoring physical signs.

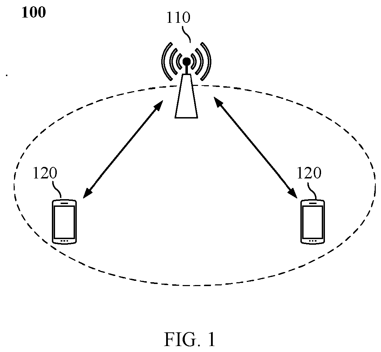

For example, the communication system 100 to which the embodiments of the present application are applicable is shown in FIG. 1. The communication system 100 may include a network device 110, and the network device 110 may be a device that communicates with terminal devices 120 (or referred to as communication terminals or terminals). The network device 110 may provide communication coverage for a specific geographical area and may communicate with terminal devices located within the coverage area.

FIG. 1 exemplarily shows one network device and two terminal devices. Optionally, the communication system 100 may include a plurality of network devices, each of which may have a coverage area in which other number of terminal devices are included, which is not limited in the embodiments of the present application.

Optionally, the communication system 100 may further include other network entities such as a network controller and a mobility management entity, which are not limited in the embodiments of the present application.

It should be understood that, in the embodiments of the present application, a device with a communication function in the network/system may be referred to as a communication device. In an example of the communication system 100 shown in FIG. 1, communication devices may include the network device 110 with the communication function and the terminal device 120 with the communication function, and the network device 110 and the terminal device 120 may be the specific devices described above, which will not be repeated here. The communication devices may further include other devices in the communication system 100, such as a network controller, a mobility management entity, and other network entities, which are not limited in the embodiments of the present application.

It should be understood that the terms "system" and "network" are often used interchangeably herein. The term "and/or" herein is only an association relationship to describe associated objects, which indicates that there may be three kinds of relationships. For example, A and/or B may indicate three cases where: A exists alone, both A and B exist, and B exists alone. Moreover, a character "/" herein generally indicates that related objects before and after the character "/" are in an "or" relationship.

It should be understood that "indicate" mentioned in the embodiments of the present application may be a direct indication, may be an indirect indication, or may represent an association relationship. For example, that A indicates B may mean that A directly indicates B, for example, B may be obtained by A; or may mean that A indirectly indicates B, for example, A indicates C, and B may be obtained through C; or may mean that there is an association relationship between A and B.

In the description of the embodiments of the present application, the term "correspond" may mean that there is a direct correspondence or indirect correspondence between two elements, or may indicate an association relationship between two elements, or may indicate a relationship of indicating and being indicate, configuring and being configured, etc.

In the embodiments of the present application, "predefined" may be implemented by pre-storing corresponding codes, tables or other methods that can be used for indicating related information in devices (for example, including a terminal device and a network device), and the specific implementation is not limited in the present application. For example, "predefined" may refer to those defined in a protocol.

In the embodiments of the present application, "protocols" may refer to standard protocols in the communication field, which may include, for example, an LTE protocol, an NR protocol, and related protocols applied in the future communication system, which is not limited in the present application.

To facilitate the understanding of the technical solutions in the embodiments of the present application, related technologies of the present application will be described.

1. Zero-power Consumption Communication

The key technologies of zero-power consumption communication include power harvesting, backscatter communication and low-power consumption technology.

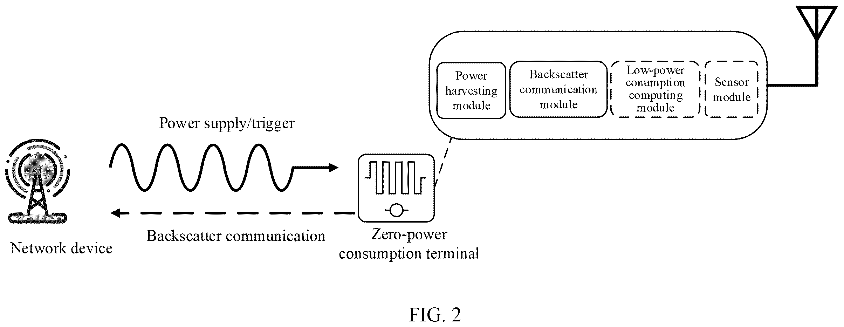

As shown in FIG. 2, a typical zero-power consumption communication system (e.g., an RFID system) includes a network device (e.g., a reader in the RFID system) and a zero-power consumption device (e.g., an electronic tag). The network device is used to transmit a wireless power supply signal and a downlink communication signal to the zero-power consumption device, and receive a backscatter signal from the zero-power consumption device. A basic zero-power consumption device includes a power harvesting module, a backscatter communication module, and a low-power computing module. In addition, the zero-power consumption device may further have a memory or sensor(s) for storing some basic information (e.g., object identification) or sensing data such as ambient temperature and ambient humidity.

For example, the power harvesting module can harvest power carried by a radio wave (a radio wave emitted by the network device shown in FIG. 2) in space, so as to drive the low-power computing module of the zero-power consumption device and implement backscatter communication. After obtaining power, the zero-power consumption device can receive a control command from the network device, and transmit data to the network device in a backscatter manner based on the control signaling. The data transmitted may be data stored in the zero-power consumption device (such as an identifier, or pre-written information (e.g., the production date, brand, and manufacturer of the product)). The zero-power consumption device may be equipped with various sensors, and may report data collected by the various sensors based on the zero-power consumption mechanism.

The key technologies of the zero-power consumption communication will be described below.

1. RF power harvesting

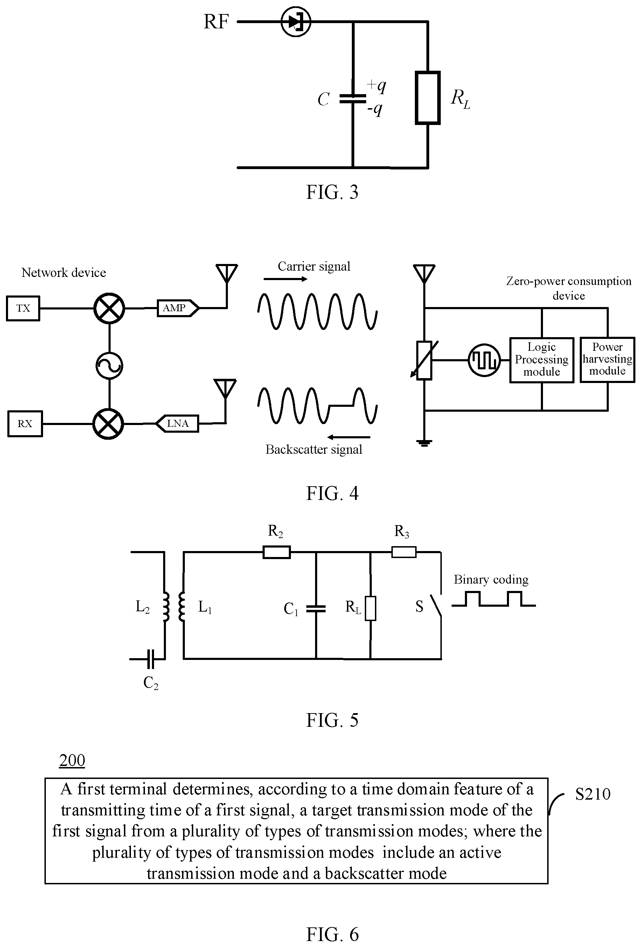

As shown in FIG. 3, an RF power harvesting module harvests electromagnetic wave energy in space based on the principle of electromagnetic induction, so as to obtain the power required to drive the zero-power consumption device to work, e.g., for driving a low-power demodulation and modulation module, a sensor, and memory reading. Therefore, the zero-power consumption device does not need a conventional battery.

In some scenarios, the zero-power consumption device can also harvest power from ambient energy (such as light energy, heat energy, kinetic energy, wind energy, or solar energy) to drive a load circuit.

2. Back scattering (backscatter) communication

As shown in FIG. 4, the zero-power consumption device receives a carrier signal transmitted by the network device, modulates the carrier signal so as to carry information to be sent, and radiates a modulated signal via antenna(s). This information transmission process is referred to as backscatter communication. Backscatter is inseparable from load modulation function. Load modulation is a manner generally used by an electronic tag to transmit data to a reader. During the load modulation, circuit parameters of an oscillation loop of the zero-power consumption device are adjusted and controlled according to the pace of a data stream, so that parameters such as an impedance of the zero-power consumption device are changed accordingly, thereby completing the modulation process. Load modulation technology mainly includes two methods: resistive load modulation and capacitive load modulation.

As shown in FIG. 5, in the resistive load modulation, a resistor is connected in parallel with a load, and the resistor is switched on or off based on control of a binary data stream. The on/off of the resistor may cause a voltage of a circuit to change, thus realizing amplitude shift keying (ASK) modulation. That is, signal modulation and transmission is achieved by adjusting an amplitude of a backscatter signal of the zero-power consumption device. In the capacitive load modulation, a resonant frequency of a circuit may be changed by switching the capacitor on or off, thereby achieving frequency shift keying (FSK) modulation. That is, the signal modulation and transmission is achieved by adjusting an operating frequency of the backscatter signal of the zero-power consumption device.

It can be seen that the zero-power consumption device modulates an incoming wave signal through load modulation, thereby achieving the backscatter communication process. Therefore, the zero-power consumption device has following significant advantages:

(1) The zero-power consumption device does not actively transmit signals, and realizes the backscatter communication by modulating the incoming wave signal;
(2) The terminal does not rely on a conventional active amplifier transmitter and meanwhile uses a low-power consumption computing unit, and thus can greatly reduce the complexity of hardware;
(3) The zero-power consumption device can realize battery-free communication with power harvesting.

3. Coding technology

The data transmitted by the zero-power consumption device may be represented by binary one ("1") and binary zero ("0") through different forms of codes. In a radio frequency identification system, one of following encoding manners are generally used: non-return-to-zero (NRZ) inverted encoding, Manchester encoding, unipolar return-to-zero encoding, differential bi-phase (DBP) encoding, differential encoding, pulse interval encoding (PIE), bi-phase space encoding (FM0), Miller encoding and differential encoding, etc. Colloquially, different encoding technologies use different pulse signals to represent 0 and 1.

In some scenarios, based on power source and usage of zero-power consumption devices, the zero-power consumption devices may be categorized into the following types.

1. Passive zero-power consumption device

The zero-power consumption device (e.g., an electronic tag in an RFID system) does not need a built-in battery. In a case where the zero-power consumption device approaches a network device (e.g., a reader in the RFID system), the zero-power consumption device is located within the near-field range formed by radiation of an antenna of the network device. Therefore, the antenna of the zero-power consumption device generates an induced current through electromagnetic induction, and the induced current drives a low-power chip circuit of the zero-power consumption device, thereby implementing operations such as demodulating a forward link signal and modulating a reverse link (or referred to as a reflection link) signal. For a backscatter link, the zero-power consumption device uses an implementation of backscatter to transmit signals.

It can be seen that the passive zero-power consumption device does not need a built-in battery to drive either the forward link or the reverse link, and is a true zero-power consumption device.

The passive zero-power consumption device does not need the battery, and the radio frequency circuit and baseband circuit are very simple. For example, the passive zero-power consumption device does not need devices such as a low-noise amplifier (LNA), a power amplifier (PA), a crystal oscillator, and an analog-to-digital converter (ADC), and thus has many advantages such as small size, light weight, very low price, and long service life.

2. Semi-passive zero-power consumption device

The semi-passive zero-power consumption device itself does not have a conventional battery installed, but can use an RF power harvesting module to harvest radio wave power and store the harvested power in a power storage unit (e.g., a capacitor). After the power storage unit obtains power, the power can be used to drive a low-power chip circuit of the zero-power consumption device, thereby implementing operations such as demodulating a forward link signal and modulating a reverse link signal. For a backscatter link, the zero-power consumption device uses an implementation of backscatter to transmit signals.

It can be seen that the semi-passive zero-power consumption device does not need a built-in battery to drive either the forward link or the inverse link. Although the power stored in the capacitor is used in operation, the power comes from radio power harvested by the power harvesting module. Therefore, the semi-passive zero-power consumption device is also a true zero-power consumption device.

The semi-passive zero-power consumption device inherits many advantages of the passive zero-power consumption device, and thus has many advantages such as small size, light weight, very low price and long service life.

3. Active zero-power consumption device

The zero-power consumption device used in some scenarios may be an active zero-power consumption device, such a device have a built-in battery used to drive a low-power chip circuit of the zero-power consumption device. Thus, operations such as demodulating a forward link signal, and modulating a reverse link signal are achieved. However, for a backscatter link, the zero-power consumption device uses an implementation of backscatter to transmit signals. Therefore, the zero-power consumption of such a device is mainly embodied in that the signal transmission of the reverse link does not need the terminal's own power, but uses a backscatter manner.

II. Cellular Passive Internet of Things

With the increase in 5G industry applications, types of connected objects and application scenarios are increasing, and there will be higher requirements on the cost and power consumption of communication terminals. The application of battery-free, low-cost passive IoT devices will become a key technology for cellular IoT, which will enrich the types and number of terminals linked to the 5G network, thereby truly achieving interconnection of everything. Passive IoT devices may be based on the zero-power consumption communication technology, e.g., RFID technology, and may be extended on this basis to be suitable for cellular IoT.

In order to facilitate understanding of the embodiments of the present application, the power supply signal, scheduling signal and carrier signal related to zero-power consumption communication will be described.

1. Power supply signal

The power supply signal is a power source from which the zero-power consumption device harvests power.

In terms of carrier of the power supply signal, the carrier may be a base station, a smart phone, a smart gateway, a charging station, a micro base station, or the like.

In terms of frequency band, the frequency band of a radio wave used for power supply may be a low frequency, an intermediate frequency, or a high frequency.

In terms of waveform, the radio wave used for power supply may be a sine wave, a square wave, a triangle wave, a pulse, or a rectangular wave.

In addition, the power supply signal can be a continuous wave or a non-continuous wave (that is, a certain period of interruption is allowed).

Optionally, the power supply signal may be an existing signal in 3GPP standards, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), or a physical broadcast channel (PBCH). Alternatively, the power supply signal may be a WIFI signal or a Bluetooth signal.

Optionally, the power supply signal may also be implemented by a newly added signal, e.g., a newly added signal dedicated to power supplying.

2. Trigger signal, also referred to as scheduling signal

The trigger signal is used to trigger or schedule the zero-power consumption device to transmit data.

In terms of carrier of the trigger signal, the carrier may be a base station, a smart phone, or a smart gateway.

In terms of frequency band, the radio wave used for triggering or scheduling may have a low frequency, an intermediate frequency, or high frequency.

In terms of a waveform, the radio wave used for triggering or scheduling may be a sine wave, a square wave, a triangle wave, a pulse, or a rectangular wave.

In addition, the trigger signal may be a continuous wave or a non-continuous wave (that is, a certain period of interruption is allowed).

Optionally, the trigger signal may be an existing signal in 3GPP standards, such as a SRS, a PUSCH, a PRACH, a PUCCH, a PDCCH, a PDSCH, a PBCH, a WIFI signal, or a Bluetooth signal.

Optionally, the trigger signal may also be implemented by a newly added signal, e.g., a newly added signal dedicated to triggering or scheduling.

3. Carrier signal

The carrier signal is used for the zero-power consumption device to generate a backscatter signal. For example, the zero-power consumption device may modulate a received carrier signal according to the information that needs to be sent, so as to form the backscatter signal.

In terms of carrier of the carrier signal, the carrier may be a base station, a smart phone, or a smart gateway.

In terms of frequency band, the radio wave used as the carrier signal may have a low frequency, an intermediate frequency, or a high frequency.

In terms of waveform, the radio wave used as the carrier signal may be a sine wave, a square wave, a triangle wave, a pulse, or a rectangular wave.

In addition, the carrier signal may be a continuous wave or a non-continuous wave (that is, a certain period of interruption is allowed).

Optionally, the carrier signal may be an existing signal in 3GPP standards, such as a SRS, a PUSCH, a PRACH, a PUCCH, a PDCCH, a PDSCH, a PBCH, a WIFI signal, or a Bluetooth signal.

Optionally, the carrier signal may also be implemented by a newly added signal, e.g., a newly added signal dedicated to generating a backscatter signal.

It should be noted that, in the embodiments of the present application, the power supply signal, the scheduling signal and the carrier signal may be the same signal or different signals. For example, the power supply signal may be used as the carrier signal, and the scheduling signal may also be used as the carrier signal.

In some scenarios, the zero-power consumption terminal does not support transmitting a signal actively, but transmit information by backscatter a carrier signal. In practical applications, some zero-power terminals with powerful capabilities can also transmit information in a way of actively transmitting a signal. Therefore, in a case where the zero-power consumption terminal supports both a backscatter communication mode and an active transmission communication mode, how to transmit a signal is an urgent problem to be solved.

To facilitate understanding of the technical solutions in the embodiments of the present application, the technical solutions of the present application will described in detail below through specific embodiments. The above-mentioned related technologies, as optional solutions, can be arbitrarily combined with the technical solutions in the embodiments of the present application, and these combined solutions all belong to the protection scope of the embodiments of the present application. The embodiments of the present application include at least part of the following contents.

FIG. 6 is a schematic diagram of a wireless communication method 200 according to the embodiments of the present application. As shown in FIG. 6, the method 200 includes at least part of the following contents.

In S210, a first terminal determines a target transmission mode of a first signal from a plurality of types of transmission modes, according to a time domain feature of a transmitting time of the first signal; where the plurality of types of transmission modes include an active transmission mode and a backscatter mode.

In some embodiments, a target receiving device is a network device. That is, the first signal may be an uplink signal.

It should be understood that the first signal may be any uplink signal; alternatively, the first signal may be replaced with an uplink channel, uplink information, or uplink data.

For example, the first signal may be an uplink signal in a random access procedure, such as a preamble signal, or a message 3 (Msg3), or a message A (MsgA).

For example, the first signal may be an uplink signal in a low-latency transmission scenario.

In some embodiments, the target receiving device is a second terminal. That is, the first signal may be a sidelink signal.

It should be understood that the first signal may be any sidelink signal; alternatively, the first signal may be replaced with a sidelink channel, sidelink information, or sidelink data.

For example, the first signal may be a physical sidelink shared channel (PSSCH), a physical sidelink control channel (PSCCH), or sidelink control information (SCI).

In the embodiments of the present application, the first terminal supports the active transmission mode and the backscatter mode, or in other words, the first terminal supports the active transmission communication and the backscatter communication, or the first terminal supports dual-mode communication or dual-mode transmission.

In some embodiments, the first terminal may be an active terminal, a semi-passive terminal, or a passive terminal.

In some embodiments, the first terminal may have a power-storage function, or may not have the power-storage function.

In some embodiments, the first terminal may be a first-type zero-power consumption terminal, which does not have a power-storage unit and a power amplifier device.

In some other embodiments, the first terminal may be a second-type zero-power consumption terminal, which has a power-storage unit but does not have a power amplifier device.

In still other embodiments, the first terminal may be a third-type zero-power consumption terminal, which has a power amplifier device but does not have a power-storage unit.

In still yet other embodiments, the first terminal may be a fourth-type zero-power consumption terminal, which has a power amplifier device and a power-storage unit.

In some embodiments, the power storage unit may refer to a battery, or may refer to other devices with power storage functions, e.g., a capacitor.

In some embodiments, the power amplifier device may refer to a PA, an LNA, or other devices with power amplification functions, such as a transistor, and a tunnel diode.

In some embodiments, the first terminal includes a primary transmitter (also called a conventional transmitter) and a backscatter transmitter. The primary transmitter supports the first terminal to transmit a signal using the active transmission mode, and the backscatter transmitter supports the first terminal to transmit the signal using the backscatter mode.

Optionally, the primary transmitter may support a high-complexity modulation manner, or in other words, may support a complex waveform. The backscatter transmitter may support a low-complexity modulation manner, or in other words, may support a simple waveform.

For example, the primary transmitter supports orthogonal frequency-division multiplexing (OFDM) modulation. The auxiliary transmitter supports amplitude shift keying (ASK) modulation, frequency shift keying (FSK), phase shift keying (PSK) modulation, or on-off keying (OOK) modulation.

In some embodiments, the primary transmitter and the backscatter transmitter may be independent modules; alternatively, the primary transmitter and the backscatter transmitter may include different functional modules of a transmitter of the first terminal, for example, the primary transmitter may include functional modules such as a local oscillator, a crystal oscillator, and an LNA, while the backscatter transmitter does not include the above functional modules.

In some embodiments, the first terminal further includes a primary receiver (also called a conventional receiver) and an auxiliary receiver. The power consumption of the primary receiver is higher than that of the auxiliary receiver, and/or the complexity of the primary receiver is higher than that of the auxiliary receiver.

Optionally, the primary receiver may be used to receive a signal transmitted through the active transmission mode.

Optionally, the primary receiver may have a relative high information processing capability, such as supporting a large bandwidth (e.g., 100 MHz), or receiving and processing high-rate information.

Optionally, the auxiliary receiver may be used to receive a signal transmitted through the backscatter mode.

Optionally, the auxiliary receiver may have a relative low information processing capability, such as only supporting a narrowband, or receiving and processing low-rate information.

In some embodiments, the primary receiver and the auxiliary receiver may be independent modules; alternatively, the primary receiver and the auxiliary receiver may include different functional modules of the receiver of the first terminal; alternatively, the primary receiver and the auxiliary receiver may share different functional modules, for example, sharing a signal amplification module.

In some embodiments, the first terminal includes only one receiver, which is used to receive signals transmitted through the active transmission mode and signals transmitted through the backscatter mode.

In some implementations, the first signal may be scheduled by the network device, or scheduled by the target receiving device.

Optionally, the network device or the target receiving device may indicate the transmitting time of the first signal when scheduling the first signal.

Optionally, if the network device or the target receiving device does not indicate the transmitting time of the first signal, the first terminal may perform communication immediately after receiving scheduling information (or in other words, control signaling, or a scheduling command); alternatively, the first terminal may perform communication at the next time unit after receiving the scheduling information; alternatively, the first terminal may perform communication at a time unit after the receiving time of the scheduling information and having a first time offset relative to the receiving time.

Optionally, a unit of the next time unit may be a symbol, a slot, a subframe, a frame, a millisecond, a second, a minute, etc; or the unit of the next time unit may be a backscatter time unit.

Optionally, the unit of the first time offset may be a symbol, a slot, a subframe, a frame, a millisecond, a second, a minute, etc; or the unit of the first time offset may be a backscatter time unit.

In some other cases, the first signal may be a scheduling-free signal.

For example, the network device or the target receiving device may schedule the first terminal to perform periodic communication, and in each period, the transmitting time of the first signal may be configured by the network device or the target receiving device.

In still other cases, the first signal represents communication autonomously initiated by the first terminal.

In some embodiments of the present application, the method 200 further includes:
obtaining, by the first terminal, time domain configuration of the first signal.

For example, the time domain configuration of the first signal may be indicated by the network device or the target receiving device, or may be determined by the first terminal. The time domain configuration of the first signal may include the transmitting time of the first signal. Optionally, the time domain configuration of the first signal may further include a transmission duration of the first signal, or an end time of the first signal.

For example, if the network device or the target receiving device has indicated the time domain configuration of the first signal when scheduling the first signal, the time domain configuration of the first signal is determined according to the indication of the network device or the target receiving device. Alternatively, if the network device or the target receiving device does not indicate the time domain configuration of the first signal, the time domain configuration of the first signal is determined according to a preset (or default) time domain configuration, or a time domain configuration selected from multiple time domain configurations is determined as the time domain configuration of the first signal. For example, the first time domain configuration of the multiple pre-configured time domain configurations is determined as the time domain configuration of the first signal. Optionally, the multiple time domain configurations may be predefined or pre-configured.

It should be understood that in the embodiments of the present application, the time domain feature of the transmitting time of the first signal may refer to the type of time domain resources corresponding to the transmitting time of the first signal, or may refer to the feature of the transmitting time of the first signal in the time domain, e.g., whether the transmitting time corresponds to a certain transmission mode.

The specific implementations for determining the target transmission mode of the first signal according to the time domain feature of the transmitting time of the first signal will be described below through the specific embodiments.

In Embodiment 1, the target transmission mode of the first signal is determined according to the distribution of time domain resources.

In Embodiment 1, time domain resources (used) for backscatter communication (also called backscatter communication time domain resources) and time domain resources (used) for active transmission communication (also called active transmission communication time domain resources) are distributed in a certain rule in the time domain.

That is, the first terminal may determine the target transmission mode of the first signal according to the distribution of the backscatter communication time domain resources and the active transmission communication time domain resources.

In the embodiments of the present application, the distribution of the backscatter communication time domain resources and the active transmission communication time domain resources in the time domain is referred to as a pattern, or a time domain configuration of dual-mode communication.

It should be understood that backscatter communication time domain resources and active transmission communication time domain resources may be distributed in the time domain in one or more patterns, which is not limited in the present application.

Optionally, the backscatter communication time domain resources may refer to time domain resources that may be used by the first terminal to perform the backscatter communication. That is, the first terminal needs to complete the entire backscatter communication process on these time domain resources. Alternatively, the backscatter communication time domain resources may refer to time domain resources on which the backscatter communication may be initiated by the first terminal. If the on-going backscatter communication is not completed at the end of these time domain resources, the first terminal may continue the backscatter communication.

Optionally, the active transmission communication time domain resources may refer to time domain resources that may be used by the first terminal to perform the active transmission communication. That is, the first terminal needs to complete the entire active transmission communication process on these time domain resources. Alternatively, the active transmission communication time domain resources may refer to time domain resources on which the active transmission communication may be initiated by the first terminal. If the active transmission communication is not completed at the end of these time domain resources, the first terminal may continue the active transmission communication.

In some embodiments, the backscatter communication time domain resources and the active transmission communication time domain resources are distributed based on a first pattern.

In some implementations, the first pattern is predefined.

In some other implementations, the first pattern is configured by the target receiving device of the first signal.

Optionally, the target receiving device is a network device, and the first pattern may be configured via any downlink signaling, such as radio resource control (RRC) signaling, a media access control control element (MAC CE), or downlink control information (DCI).

Optionally, the target receiving device is the second terminal, and the first pattern may be configured via any sidelink signaling, such as sidelink RRC signaling, or sidelink control information (SCI).

For example, the first pattern may be pre-configured by the target receiving device of the first signal, or may be configured when the target receiving device schedules the first signal.

In some other implementations, the first pattern is configured by the network device.

Optionally, the first pattern may be configured via any downlink signaling, such as RRC signaling, a MAC CE, or DCI.

For example, the first pattern may be pre-configured by the network device, or may be configured when the network device schedules the first signal.

In some implementations, the first pattern may be determined by the first terminal.

For example, the first pattern may be selected by the first terminal from multiple candidate patterns, and the multiple candidate patterns correspond to different resource distributions of backscatter communication time domain resources and active transmission communication time domain resources. Optionally, the multiple candidate patterns are predefined, or the multiple candidate patterns are configured by the target receiving device or the network device.

In some embodiments, the first pattern is periodic or aperiodic. For example, the backscatter communication time domain resources and active transmission communication time domain resources are distributed in the time domain in the first pattern over a first time period, and are distributed in the time domain in a second pattern over a second time period.

Optionally, a unit of the period of the first pattern (or referred to as a pattern period) may be a symbol, a slot, a subframe, a frame, a millisecond, a second, or a minute, e.g., 1 frame or 10 frames.

In some embodiments, the position of the first pattern is fixed.

For example, the first pattern is a periodic distribution, that is, backscatter communication time domain resources and active transmission communication time domain resources are both distributed in the same pattern over different pattern periods.

It should be understood that, within one pattern period, the backscatter communication time domain resources may be continuous or non-continuous, and the active transmission communication time domain resources may be continuous or non-continuous.

In some embodiments, that the position of the first pattern is fixed may include:

that a start position of the first pattern is fixed. For example, the first pattern is a periodic distribution, and the first pattern has the same start position within each pattern period.

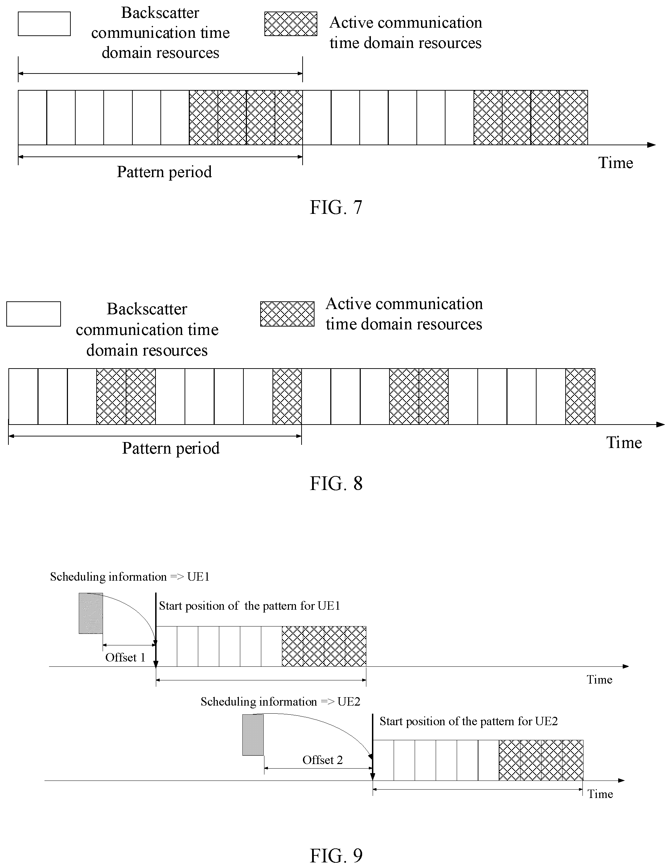

FIG. 7 is a schematic diagram of a first pattern provided in the embodiments of the present application. As shown in FIG. 7, there are backscatter communication time domain resources and active transmission communication time domain resources existing in each pattern period, and time domain resources in different pattern periods are distributed in the same way. For example, the pattern period is a frame, in which backscatter communication time domain resources occupy the first 6 slots and active transmission communication time domain resources occupy the remaining 4 slots.

FIG. 8 is a schematic diagram of another first pattern provided in the embodiments of the present application. As shown in FIG. 8, there are backscatter communication time domain resources and active transmission communication time domain resources existing in each pattern period, and time domain resources in different pattern periods are distributed in the same way. For example, the pattern period is a frame, in which backscatter communication time domain resources occupy slot 0 to slot 2 and slot 5 to slot 8 and active transmission communication time domain resources occupy the remaining 3 slots.

In some embodiments, the position of the first pattern is variable, or in other words, floating. For example, the start position of the first pattern is variable.

In some embodiments, a reference for determining the position of the first pattern is a first time domain position, and the first time domain position is variable.

For example, the start position of the first pattern is the first time domain position.

In another example, the start position of the first pattern is a second time domain position, and the second time domain position has a first offset relative to the first time domain position. It should be understood that the present application does not limit the unit of the first offset. For example, the unit of the first offset may be a symbol, a slot, a subframe, a frame, a millisecond, a second, or a minute.

Optionally, for different terminal devices, the same first offset may be set, or different first offsets may be set.

In some embodiments, the first offset is predefined.

In some other embodiments, the first offset is configured by the target receiving device of the first signal.

For example, the target receiving device is the second terminal, and the second terminal may configure the first offset for the first terminal.

Optionally, the first offset may be configured via any sidelink signaling, such as sidelink RRC signaling, or SCI.

For example, the target receiving device is the network device, and the network device may configure the first offset for the first terminal.

Optionally, the first offset may be configured via any downlink signaling, such as RRC signaling, a MAC CE, or DCI.

Optionally, the first offset may be pre-indicated by the target receiving device of the first signal, or may be indicated when the target receiving device schedules the first signal.

Optionally, the target receiving device of the first signal may directly indicate a specific offset, or may indicate an index corresponding to the first offset. For example, a plurality of offsets are preconfigured, each of the offsets corresponds to an index, and the target receiving device may indicate a specific offset through an index.

In some other embodiments, the first offset is configured by the network device.

For example, the target receiving device is the second terminal, and the network device may configure the first offset for the first terminal. Optionally, the network device may configure the first offset for the second terminal, or the first terminal may indicate the first offset to the second terminal.

For example, the target receiving device is the network device, and the network device may configure the first offset for the first terminal.

Optionally, the first offset may be configured via any downlink signaling, such as RRC signaling, a MAC CE, or DCI.

Optionally, the first offset may be pre-indicated by the network device, or may be indicated when the network device schedules the first signal.

Optionally, the network device may directly indicate a specific offset, or may indicate an index corresponding to the first offset. For example, a plurality of offsets are preconfigured, each of the offsets corresponds to an index, and the network device may indicate a specific offset through an index.

In some embodiments, the first time domain position is a time domain position at which the first terminal receives scheduling information of the first signal.

For example, the first time domain position may be the time when the first terminal receives the scheduling information of the first signal, or may be the time unit occupied by the first terminal when the first terminal receives the scheduling information, such as a symbol, a slot, a subframe, or a frame.

In some embodiments, the first time domain position is the time domain position indicated by the target receiving device of the first signal or the network device.

For example, the first time domain position may be indicated by the target receiving device or the network device through the scheduling information, or may be indicated through other information. That is, the target receiving device or the network device may indicate the scheduling information and the first time domain position through the same signaling or different signaling.

FIG. 9 is a schematic diagram of another distribution pattern of time domain resources provided in the embodiments of the present application. As shown in FIG. 9, the start position of the pattern may be a time position latter than and having an offset relative to the time position where the scheduling information is received. The offsets set for different UEs may be the same or different. For example, for UE1, a time position with Offset 1 after the reception of the scheduling information is determined as the start position of the pattern; and for UE2, a time position with Offset 2 after the reception of the scheduling information is determined as the start position of the pattern. Offset 1 and Offset 2 may be the same or different.

It should be understood that the way to represent the first pattern is not limited in the present application. For example, the first pattern may be represented as a bitmap. Alternatively, specific positions of the backscatter communication time domain resources and the active transmission communication time domain resources may be directly indicated as the first pattern, for example, a start position, or a start position and a time duration, or a start position and an end position of the backscatter communication time domain resources and the active transmission communication time domain resources may be indicated as the first pattern.

Optionally, in a case where the first pattern is configured by the network device or the target receiving device, the network device or the target receiving device may be configured to directly indicate a specific pattern, or to indicate index information of the first pattern, e.g., the index information corresponding to the first pattern in multiple patterns. The multiple patterns may be predefined, or may be pre-configured by the network device or the target receiving device.

In some embodiments, the first pattern is represented by a first bitmap, the first bitmap includes a plurality of bit groups, each bit group includes one or more bits, each bit group corresponds to N time units, and a value of each bit group is used to indicate a resource type of corresponding N time units, where N is a positive integer.

In some embodiments, units of the N time units may be symbols, slots, subframes, frames, milliseconds, seconds, minutes, etc, which are not limited in the present application. N may be equal to 1 or greater than 1.

It should be understood that in the embodiments of the present application, the number of bits included in the first bitmap and the number of time units corresponding to each bit group may be fixed, or may be flexibly configured, which is not limited in the present application.

In some embodiments, the value of each bit group is used to indicate that the corresponding N time units are time domain resources for backscatter communication, or time domain resources for active transmission communication, or flexible time domain resources. The flexible time domain resources may refer to that the N time units may be used as time domain resources for backscatter communication or time domain resources for the active transmission communication.

For example, each bit group includes 2 bits, and different values of the 2 bits are used to indicate that the corresponding N time units are the backscatter communication time domain resources, the active transmission communication time domain resources, or the flexible time domain resources. For example, when the 2 bits have a value of "00", it indicates that the corresponding N time units are backscatter communication time domain resources; when the 2 bits have a value of "01", it indicates that the corresponding N time units are active transmission communication time domain resources; and when the 2 bits have a value of "10", it indicates that the corresponding N time units are flexible time domain resources. It should be understood that the above correspondence between values and resource types is only an example. The present application does not limit the correspondence except that the correspondence should guarantee that different resource types correspond to different values of a bit group.

In some other embodiments, the value of each bit group is used to indicate whether the corresponding N time units are time domain resources for backscatter communication or time domain resources for active transmission communication.

For example, each bit group includes 1 bit, and different values of the 1 bit are used to indicate whether the corresponding N time units are backscatter communication time domain resources or active transmission communication time domain resources. For example, if the 1 bit has a value of "0", it indicates that the corresponding N time units are time domain resources for backscatter communication; and if the 1 bit has a value of "1", it indicates that the corresponding N time units are time domain resources for active transmission communication. It should be understood that the above correspondence between values and resource types is only an example. The present application does not limit the correspondence except that the correspondence should guarantee that different resource types correspond to different values of a bit group.

Specific implementations for determining the target transmission mode of the first signal according to the transmitting time of the first signal and the first pattern will be described below through Embodiment 1-1 and Embodiment 1-2.

Embodiment 1-1

In some embodiments, S210 includes:
determining the target transmission mode of the first signal according to the time domain resource type corresponding to the transmitting time of the first signal in the first pattern.

For example, if the time domain resource type corresponding to the transmitting time of the first signal in the first pattern is time domain resources used for backscatter communication, it is determined that the target transmission mode of the first signal is the backscatter mode.

In another example, if the time domain resource type corresponding to the transmitting time of the first signal in the first pattern is time domain resources used for active transmission communication, it is determined that the target transmission mode of the first signal is the active transmission mode.

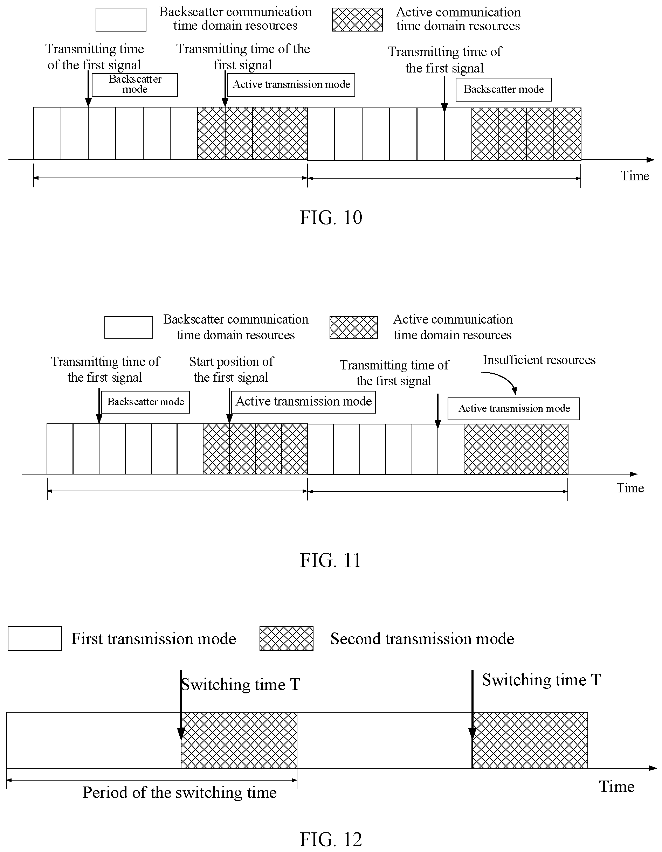

With reference to FIG. 10, a method for determining the target transmission mode of the first signal will be described through an example of first pattern shown in FIG. 7.

As shown in FIG. 10, if the time domain resource type corresponding to the transmitting time of the first signal is the backscatter communication time domain resource, the backscatter mode is selected for transmission of the first signal. Alternatively, if the time domain resource type corresponding to the transmitting time of the first signal is the active transmission communication time domain resource, the active transmission mode is selected for transmission of the first signal.

In some embodiments, the method 200 further includes:

transmitting the first signal on time domain resources for backscatter communication, if the backscatter mode is determined to be used for transmission the first signal; or

transmitting the first signal on time domain resources for backscatter communication and time domain resources for active transmission communication, if the backscatter mode is determined to be used for transmission of the first signal.

That is, in a case where the first terminal transmit the first signal through the backscatter mode, the time domain resources used may include backscatter communication time domain resources only, or may include backscatter communication time domain resources and active transmission communication time domain resources. For example, if time domain resources required for transmitting the first signal via the backscatter mode exceed available backscatter communication time domain resources when the first terminal initiates backscatter communication, the time domain resources used by the first terminal to transmit the first signal may include backscatter communication time domain resources and active transmission communication time domain resources.

In some embodiments, the method 200 further includes:

transmitting the first signal on time domain resources for active transmission communication, if the active transmission mode is determined to be used for transmission of the first signal; or

transmitting the first signal on time domain resources for active transmission communication and time domain resources for backscatter communication, if the active transmission mode is determined to be used for transmission of the first signal.

That is, in a case where the first terminal transmits the first signal through the active transmission mode, the time domain resources used may include active transmission communication time domain resources only, or may include active transmission communication time domain resources and backscatter communication time domain resources. For example, if time domain resources required for transmitting the first signal via the active transmission mode exceed available active transmission communication time domain resources when the first terminal initiates active transmission communication, the time domain resources used by the first terminal to transmit the first signal include active transmission communication time domain resources and backscatter communication time domain resources.

In some embodiments, based on the time domain configuration of the first signal (such as the time domain configuration indicated by the target receiving device, the time domain configuration indicated by the network device, a default time domain configuration, or one of multiple pre-configured time domain configurations (e.g., the first time domain configuration)), the target receiving device may turn on a receiver (e.g., the auxiliary receiver) corresponding to the backscatter communication within the range of the backscatter communication time domain resources, or in other words, receive a signal using a receiving mode corresponding to backscatter communication; alternatively, the target receiving device may turn on a receiver (e.g., the primary receiver) corresponding to the active transmission communication within the range of the active transmission communication time domain resources, or in other words, receive a signal using a receiving mode corresponding to the active transmission communication.

For example, the target receiving device turns on the auxiliary receiver at the backscatter communication time domain resource corresponding to the transmitting time of the first signal or at an earlier time position than that.

In another example, the target receiving device turns on the primary receiver at the active communication time domain resource corresponding to the transmitting time of the first signal or at an earlier time position than that.

Optionally, in Embodiment 1-1, the target receiving device may turn off the receiver corresponding to the backscatter communication within the range of active transmission communication time domain resources, or in other words, no longer receive signals using the receiving mode corresponding to the backscatter communication; alternatively, the target receiving device may turn off the receiver corresponding to the backscatter communication after the reception of the first signal is completed within active transmission communication time domain resources. In this case, the first terminal occupies the active transmission communication time domain resources to perform the backscatter communication.

Optionally, in Embodiment 1-1, the target receiving device may turn off the receiver corresponding to the active transmission communication within the range of backscatter communication time domain resources, or in other words, no longer receive signals using the receiving mode corresponding to the active transmission communication; alternatively, the target receiving device may turn off the receiver corresponding to the active transmission communication after the reception of the first signal is completed within backscatter communication time domain resources. In this case, the first terminal occupies the backscatter communication time domain resources to perform the active transmission communication.

Embodiment 1-2

In some embodiments, S210 includes:
determining the target transmission mode of the first signal, according to the time domain resource type corresponding to the transmitting time of the first signal in the first pattern and the size of the remaining time domain resources (e.g., the number of remaining available time domain resources) with such a time domain resource type after the transmitting time.
That is, in Embodiment 1-2, besides the time domain resource type corresponding to the transmitting time of the first signal, the first terminal further considers the size of the remaining available time domain resources, which is conducive to ensuring reliable transmission of the first signal.
In some embodiments, if the time domain resource type corresponding to the transmitting time of the first signal is time domain resources for backscatter communication, the first terminal may determine the target transmission mode of the first signal according to whether the size of the remaining time domain resources for backscatter communication meets a backscatter communication duration required for the first signal (that is, whether the remaining time domain resources for backscatter communication are sufficient to complete the entire backscatter communication process of the first signal).
For example, if the size of the remaining time domain resources for backscatter communication meets the backscatter communication duration of the first signal, the backscatter mode is determined to be used for the transmission of the first signal.
In another example, if the size of the remaining time domain resources for backscatter communication does not meet the backscatter communication duration of the first signal, the active transmission mode is determined to be used for the transmission of the first signal, or the backscatter mode and the active transmission mode are determined to be used for the transmission of the first signal.
In some embodiments, that the first terminal transmits the first signal using the backscatter mode and the active transmission mode may refer to that:

the first terminal transmits, via the backscattering mode, a portion of bits in information carried by the first signal, and transmits, via the active transmission mode, the remaining bits in the information carried by the first signal; or
the first terminal transmits, via the backscattering mode, a portion of bits in information carried by the first signal, and transmits, via the active transmission mode, all the bits in the information carried by the first signal.

Optionally, that the size of the remaining time domain resources for backscatter communication meets the backscatter communication duration of the first signal may refer to that:

the number of time units included in the remaining time domain resources for backscatter communication is greater than or equal to the number of time units occupied by transmission of the first signal based on the backscatter mode; or
the number of time units included in the remaining backscatter communication time domain resources is greater than the number of time units occupied by transmission of the first signal based on backscatter mode.

Optionally, that the size of the remaining time domain resources for backscatter communication does not meet the backscatter communication duration of the first signal may refer to that:

the number of time units included in the remaining time domain resources for backscatter communication is less than or equal to the number of time units occupied by transmission of the first signal based on the backscatter mode; or
the number of time units included in the remaining time domain resources for backscatter communication is less than the number of time units occupied by transmission of the first signal based on the backscatter mode.

In still other embodiments, if the time domain resource type corresponding to the transmitting time of the first signal is time domain resources for active transmission communication, the first terminal may determine the target transmission mode of the first signal according to whether the size of the remaining time domain resources for active transmission communication meets the active transmission communication duration required by the first signal (that is, whether the remaining active transmission communication time domain resources are sufficient to complete the entire active transmission communication process of the first signal).
For example, if the size of the remaining time domain resources for active transmission communication meets the active transmission communication duration of the first signal, the active transmission mode is determined to be used for the transmission of the first signal.

In another example, if the size of the remaining time domain resources for active transmission communication does not meet the active transmission communication duration of the first signal, the backscatter mode is determined to be used for the transmission of the first signal, or the active transmission mode and backscatter mode are determined to be used for the transmission of the first signal.

In some embodiments, that the first terminal transmits the first signal using the active transmission mode and the backscatter modes may refer to that:

the first terminal transmits a portion of bits in information carried by the first signal via the active transmission mode, and transmits the remaining bits in the information carried by the first signal via the backscatter mode; or

the first terminal transmits a portion of bits in information carried by the first signal via the active transmission mode, and transmits all the bits in the information carried by the first signal via the backscatter mode.

Optionally, that the size of the remaining time domain resources for active transmission communication meets the active transmission communication duration of the first signal may refer to that:

the number of time units included in the remaining active transmission communication time domain resources is greater than or equal to the number of time units occupied by transmission of the first signal based on the active transmission mode; or

the number of time units included in the remaining active transmission communication time domain resources is greater than the number of time units occupied by transmission of the first signal based on the active transmission mode.

Optionally, that the size of the remaining time domain resources for active transmission communication does not meet the active transmission communication duration of the first signal may refer to that:

the number of time units included in the remaining active transmission communication time domain resources is less than or equal to the number of time units occupied by transmission of the first signal based on the active transmission mode; or

the number of time units included in the remaining active transmission communication time domain resources is less than the number of time units occupied by transmission of the first signal based on the active transmission mode.

Optionally, in Embodiment 1-2, in a case where the first terminal transmits the first signal using the active transmission mode, the first terminal may transmit the first signal on the active transmission communication time domain resources. That is, time domain resources used for transmission of the first signal performed by the first terminal using the active transmission mode may include active transmission communication time domain resources only.

Optionally, in Embodiment 1-2, in a case where the first terminal transmits the first signal using the backscatter mode, the first terminal may transmit the first signal on the backscatter communication time domain resources. That is, time domain resources used for transmission of the first signal performed by the first terminal using the backscatter mode may include backscatter communication time domain resources only.

With reference to FIG. 11, a method for determining the target transmission mode of the first signal will be described through an example of first pattern shown in FIG. 7.

As shown in FIG. 11, if the time domain resource type corresponding to the transmitting time of the first signal is backscatter communication time domain resources, and the remaining continuous backscatter communication time domain resources are sufficient for the first terminal to transmit the first signal using the backscatter mode, then the first terminal selects the backscatter mode to transmit the first signal. Alternatively, if the time domain resource type corresponding to the transmitting time of the first signal is active transmission communication time domain resources, and the remaining continuous active transmission communication time domain resources are sufficient for the first terminal to transmit the first signal using the active transmission mode, then the first terminal selects the active transmission mode to transmit the first signal. Alternatively, if the time domain resource type corresponding to the transmitting time of the first signal is backscatter communication time domain resources, and the remaining continuous backscatter communication time domain resources are not sufficient for the first terminal to transmit the first signal using the backscatter mode, then the first terminal selects the active transmission mode to transmit the first signal, for example, transmit the first signal on subsequent active transmission communication time domain resources.

In some embodiments, based on the time domain configuration of the first signal (such as the time domain configuration indicated by the target receiving device, the time domain configuration indicated by the network device, a default time domain configuration, or one of multiple pre-configured time domain configurations (e.g., the first time domain configuration)), the target receiving device may turn on a receiver (e.g., the auxiliary receiver) corresponding to the backscatter communication within the range of the backscatter communication time domain resources, or in other words, receive a signal using the receiving mode corresponding to backscatter communication; alternatively, the target receiving device may turn on a receiver (e.g., the primary receiver) corresponding to the active transmission mode within the range of the active transmission communication time domain resources, or in other words, receive a signal using the receiving mode corresponding to the active transmission communication.

For example, in a case where the target transmission mode of the first signal is the backscatter mode, the auxiliary receiver is turned on at the backscatter communication time domain resource corresponding to the transmitting time of the first signal or at an earlier time position than that.

For example, in a case where the target transmission mode of the first signal is the active transmission mode, the primary receiver is turned on at the active transmission communication time domain resource corresponding to the transmitting time of the first signal or at an earlier time position than that.

Optionally, the target receiving device may turn off the receiver corresponding to the backscatter communication within the range of active transmission communication time domain resources, or in other words, no longer receive signals using the receiving mode corresponding to the backscatter communication.

Optionally, the target receiving device may turn off the receiver corresponding to the active transmission communication within the range of backscatter communication time domain resources, or in other words, no longer receive the signal using the receiving mode corresponding to the active transmission communication.

In Embodiment 2, the target transmission mode of the first signal is determined according to a switching time of transmission modes (or called switching time configuration of dual-mode transmission).

Optionally, the switching time of transmission modes includes a switching time from the active transmission mode to the backscatter mode and/or a switching time from the backscatter mode to the active transmission mode.

In some embodiments, S210 may include:

determining the transmission mode corresponding to the transmitting time of the first signal according to the transmission modes before and after the switching time; and

determining the transmission mode corresponding to the transmitting time as the target transmission mode of the first signal.

For example, a transmission mode before the switching time is the first transmission mode, and a transmission mode after the switching time is the second transmission mode. In this case, if the transmitting time of the first signal is earlier than the switching time, the first transmission mode is determined as the target transmission mode of the first signal; otherwise, the second transmission mode is determined as the target transmission mode of the first signal.

Optionally, the first transmission mode is the active transmission mode, and the second transmission mode is the backscatter mode.

Optionally, the first transmission mode is the backscatter mode, and the second transmission mode is the active transmission mode.

In Embodiment 2, it can be considered that time domain resources for backscatter communication and time domain resources for active transmission communication are determined based on the switching time. For example, if the transmission mode before the switching time is the first transmission mode, and the transmission mode after the switching time is the second transmission mode, then time domain resources before the switching time are time domain resources for the first transmission mode and time domain resources after the switching time are time domain resources for the second transmission mode.

Therefore, in some embodiments, S210 may include:

determining the time domain resource type corresponding to the transmitting time of the first signal, according to time domain resource types before and after the switching time; and

determining the target transmission mode of the first signal, according to the time domain resource type corresponding to the transmitting time of the first signal.

For example, in a case where a switch from the first transmission mode to the second transmission mode is performed at the switching time, then time domain resources before the switching time are time domain resources for the first transmission mode, and time domain resources after the switching time are time domain resources for the second transmission mode. In this case, if the transmitting time of the first signal is earlier than the switching time, then the time domain resource type corresponding to the transmitting time of the first signal is time domain resources for the first transmission mode, and thus it can be determined that the first transmission mode is used for transmission of the first signal; otherwise, the second transmission mode is used for transmission of the first signal.

In some embodiments, a position of the switching time in the time domain is predefined.

In some embodiments, the position of the switching time in the time domain is configured by the network device. For the specific configuration method, reference may be made to the way for configuring the first pattern, which will not be repeated here.

In some embodiments, the position of the switching time in the time domain is configured by the target receiving device of the first signal. For the specific configuration method, reference may be made to the way for configuring the first pattern, which will not be repeated here.

In some embodiments, the position of the switching time in the time domain is periodic.

Optionally, the unit of the period may be a symbol, a slot, a subframe, a frame, a millisecond, a second, a minute, etc. For example, the period may be 1 frame or 10 frames.

Optionally, within each period, there may be one switching time or a plurality of switching time.

For example, within a period, there are a first switching time and a second switching time. A transmission mode before the first switching time is a third transmission mode, a transmission mode between the first switching time and the second switching time is a fourth transmission mode, and a transmission mode after the second switching time is a fifth transmission mode. The third transmission mode is different from the fourth transmission mode, and the fourth transmission mode is different from the fifth transmission mode.

Optionally, the third transmission mode may be the backscatter mode, the fifth transmission mode may be the active transmission mode, and the sixth transmission mode may be the backscatter mode.

Optionally, the third transmission mode may be the active transmission mode, the fifth transmission mode may be the backscatter mode, and the sixth transmission mode may be the active transmission mode.

Optionally, the third transmission mode may be the active transmission mode, the fifth transmission mode may be the active transmission mode and the backscatter mode, and the sixth transmission mode may be the backscatter mode.

Optionally, the third transmission mode may be the backscatter mode, the fifth transmission mode may be the backscatter mode and the active transmission mode, and the sixth transmission mode may be the active transmission mode.

In some embodiments, the position of the switching time is fixed.

For example, the switching time is distributed periodically, and the switching time has the same position within different periods.

FIG. 12 is a schematic diagram illustrating the distribution of the switching time provided in the embodiments of the present application. As shown in FIG. 12, the switching time has the same position within different periods. For example, a period is a frame, the transmission mode before the switching time is the first transmission mode, and the transmission mode after the switching time is the second transmission mode.

In some embodiments, the position of the switching time is variable, or in other words, floating.

For example, a reference for determining the position of the switching time is the third time domain position. The third time domain position is variable.

For example, a start position of the switching time is the third time domain position.

In another example, the start position of the switching time is a fourth time domain position, and the fourth time domain position has a second offset relative to the third time domain position. It should be understood that the present application does not limit the unit of the second offset. For example, the unit of the second offset may be a symbol, a slot, a subframe, a frame, a millisecond, a second, or a minute.

Optionally, the same second offset or different second offsets may be set for different terminal devices.

In some embodiments, the second offset is predefined.

In some other embodiments, the second offset is configured by the network device. For the specific configuration method, reference may be made to the specific implementations of configuring the first offset in Embodiment 1, which will not be repeated here.

In still other embodiments, the second offset is configured by the target receiving device of the first signal. For the specific configuration method, reference may be made to the specific implementations of configuring the first offset in Embodiment 1, which will not be repeated here.

In some embodiments, the third time domain position is the time domain position at which the first terminal receives the scheduling information of the first signal.

For example, the third time domain position may be the time when the first terminal receives the scheduling information of the first signal, or may be the time unit occupied by the first terminal when the first terminal receives the scheduling information, such as a symbol, a slot, a subframe, or a frame.

In some other embodiments, the third time domain position is the time domain position indicated by the target receiving device of the first signal or the network device.

For example, the third time domain position may be indicated by the target receiving device or the network device through the scheduling information, or may be indicated through other information. That is, the target receiving device or the network device may indicate the scheduling information and the third time domain position through the same signaling or different signaling.

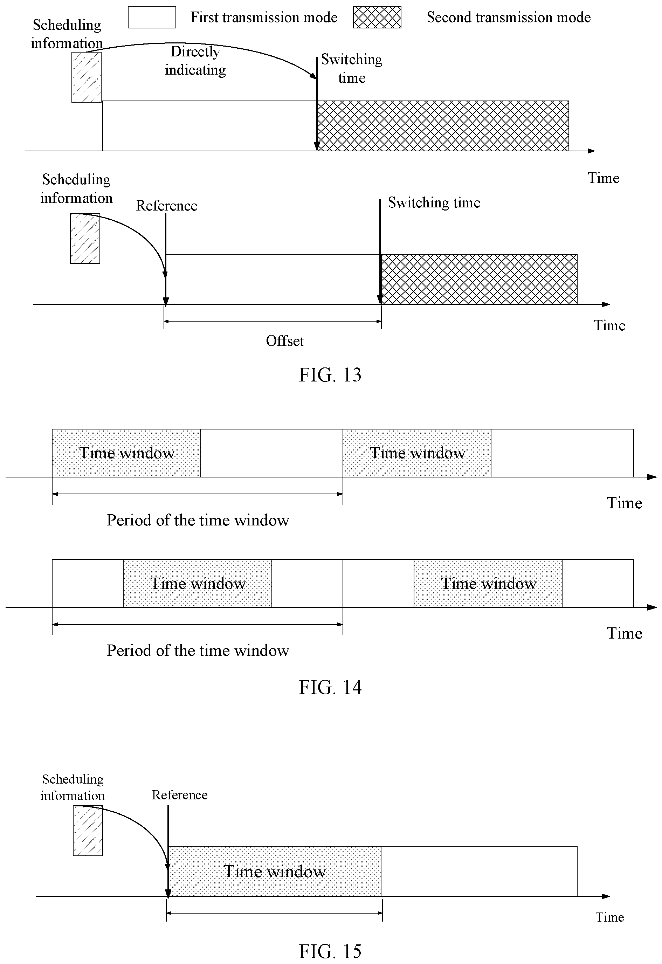

FIG. 13 is a schematic diagram illustrating another distribution of the switching time provided in the embodiments of the present application. As shown in FIG. 13, the scheduling information may be used to directly indicate the position of the switching time, or the time domain position at which the scheduling information is received (i.e., the third time domain position) may be used as the reference for determining the position of the switching time. For example, a time position latter than and having a second offset relative to the time domain position at which the scheduling information is determined as the position of the switching time.

In Embodiment 3, the target transmission mode of the first signal is determined according to a time window, and the time window corresponds to the first transmission mode.

In Embodiment 3, time domain resources for backscatter communication and time domain resources for active transmission communication are determined based on the time window.

Optionally, the first transmission mode is the active transmission mode. In this case, the time window is also called an active transmission time window.

Optionally, the first transmission mode is the backscatter mode. In this case, the time window is also called a backscatter time window.

In some embodiments, the time window corresponds to the backscatter mode, time domain resources within the time window are used for the backscatter communication, and time domain resources outside the time window are used for the active transmission communication. That is, the first terminal may perform the backscatter communication within the time window, in other words, the entire backscatter communication process is performed within the time window. The first terminal may perform the active transmission communication outside the time window, in other words, the entire active transmission communication process is performed outside the time window.

In some other embodiments, the time window corresponds to the backscatter mode, time domain resources within the time window are used for the first terminal to initiate the backscatter communication, and time domain resources outside the time window are used for the active transmission communication and/or the backscatter communication. That is, the first terminal may initiate the backscatter communication within the time window. In this case, the backscatter communication process may occupy time domain resources outside the time window.

In some embodiments, the time window corresponds to the active transmission mode, time domain resources within the time window are used for the active transmission communication, and time domain resources outside the time window are used for the backscatter communication. That is, the first terminal may perform the active transmission communication within the time window, in other words, the entire active transmission communication process is performed within the time window. The first terminal may perform the backscatter communication outside the time window, in other words, the entire backscatter communication process is performed outside the time window.

In some other embodiments, the time window corresponds to the active transmission mode, time domain resources within the time window are used for the first terminal to initiate the active transmission communication, and time domain resources outside the time window are used for the active transmission communication and/or the backscatter communication. That is, the first terminal may initiate the active transmission communication within the time window. In this case, the active transmission communication process may occupy time domain resources outside the time window.

In some embodiments, the time window is predefined.

In some embodiments, the time window is configured by the network device. For the specific configuration method, reference may be made to the way for configuring the first pattern, which will not be repeated here.

In some embodiments, the time window is configured by the target receiving device of the first signal. For the specific configuration method, reference may be made to the way for configuring the first pattern, which will not be repeated here.

Optionally, the network device or the target receiving device may directly indicate a specific position of the time window, or may indicate index information corresponding to the position of the time window, e.g., an index of a target time window of a plurality of time windows. The plurality of time windows may be predefined, or pre-configured (i.e., configured in advance). Alternatively, the network device or the target receiving device may indicate a length of the time window only, e.g., directly indicate a specific time length, Alternatively, he network device or the target receiving device may indicate a ratio of the length of the time window to the length of the period, for example, when indicating 1/2, it means that the length of the time window occupies 1/2 of the length of the period. In this case, the start position of the time window may be the start position of the period.

In some embodiments, the time window is periodic, or may be aperiodic. For example, the time window has different start positions and/or time lengths in different time periods.

Optionally, the unit of the period of the time window may be a symbol, a slot, a subframe, or a frame. Alternatively, the unit of THE period of the time window may be a millisecond, a second, a minute, an hour, etc.

Optionally, the period of the time window may be configured by the network device, or may be configured by the target receiving device, or may be predefined.

For example, the period of the time window may be configured through semi-static signaling or dynamic signaling. For example, the period of the time window may be configured before the first signal is scheduled, or may be indicated by scheduling information used for transmitting the first signal.

Optionally, the network device or the target receiving device may directly indicate a specific length of the period, or may indicate index information corresponding to the period, e.g., an index of a target period of a plurality of periods. The plurality of periods may be predefined or pre-configured (i.e., configured in advance).

In some embodiments, the position of the time window is determined according to first information, and the first information includes at least one of the following:

a time length of the time window, a start position of the time window, an end position of the time window, an offset of the start position of the time window relative to a reference time domain position, an offset of the end position of the time window relative to a reference time domain position, period information of the time window, or a ratio of the time length of the time window to a period of the time window.

Optionally, the first information is predefined, or configured by the network device or the target receiving device; alternatively, a portion of the first information is predefined and the remaining portions of the first information is configured by the network device or the target receiving device.

In some embodiments, the position of the time window is determined according to the start position and the time length of the time window, or according to the start position and the end position of the time window, or according to the end position and the time length of the time window.

In some implementations, the start position of the time window may be indicated by the network device or the target receiving device, or may be determined with reference to a fifth time domain position, that is, the fifth time domain position is a reference time domain position.

In some implementations, the end position of the time window may be indicated by the network device or the target receiving device, or may be determined with reference to a seventh time domain position, that is, the seventh time domain position is a reference time domain position.

In some implementations, the time length of the time window may be indicated by the network device or the target receiving device, or may be predefined. Optionally, the unit of the time length of the time window may be a symbol, a slot, a subframe, or a frame; alternatively, the unit of the time length of the time window may be a millisecond, a second, a minute, or an hour; alternatively, the unit of the time length of the time window may be represented by a proportion of the time length of the time window to the period length of the time window.

In some embodiments, the position of the time window is fixed.

For example, the time windows are distributed periodically, and the distribution of the time windows in different period is the same.

Optionally, in each period, there may be a time window or a plurality of time windows. The plurality of time windows may correspond to the same transmission mode, or may correspond to different transmission modes.

FIG. 14 is a schematic diagram illustrating the distribution of a time window provided in the embodiments of the present application. As shown in FIG. 14, the time window has the same position in different periods.

In some embodiments, the position of the time window is variable. For example, the start position of the time window is variable.

For example, the start position of the time window is determined with reference to a fifth time domain position, and the fifth time domain position is variable.

For example, the start position of the time window is the fifth time domain position.

In an example, the start position of the time window is a sixth time domain position, and the sixth time domain position has a third offset relative to the fifth time domain position.

It should be understood that the present application does not limit the unit of the third offset. For example, the unit of the third offset may be a symbol, a slot, a subframe, a frame, a millisecond, a second, or a minute.

Optionally, the same third offset or different third offsets may be set for different terminal devices.

In some embodiments, the third offset is predefined.

In some other embodiments, the third offset is configured by the network device. For the specific configuration method, reference may be made to the specific implementations of configuring the first offset in Embodiment 1, which will not be repeated here.

In still other embodiments, the third offset is configured by the target receiving device of the first signal. For the specific configuration method, reference may be made to the specific implementations of configuring the first offset in Embodiment 1, which will not be repeated here.

In some embodiments, the fifth time domain position is the time domain position at which the first terminal receives the scheduling information of the first signal.

For example, the fifth time domain position may be the time when the first signal receives the scheduling information, or may be the time unit occupied by first terminal when the first terminal receives the scheduling information, such as a symbol, a slot, a subframe, or a frame.

In some other embodiments, the fifth time domain position is the time domain position indicated by the target receiving device of the first signal or the network device

For example, the fifth time domain position may be indicated by the target receiving device or the network device through the scheduling information, or may be indicated through other information. That is, the target receiving device or the network device may indicate the scheduling information and the fifth time domain position through the same signaling or different signaling.

FIG.15 is a schematic diagram illustrating another distribution of the time window provided in the embodiments of the present application. As shown in FIG. 15, the start position of the time window may be determined by the first terminal by referring to the time domain position (i.e., the fifth time domain position) at which the scheduling information is received. For example, the time domain position at which the scheduling information is received is determined as the start position of the time window.

In Embodiment 3, S210 may include:

determining to transmit the first signal using the first transmission mode, if the transmitting time of the first signal is within the time window; or

determining to transmit the first signal using the second transmission mode, if the transmitting time of the first signal is not within the time window; where the second transmission mode is different from the first transmission mode.

For example, if the first transmission mode is the backscatter mode, the time window is the backscatter time window. In this case, if the transmitting time of the first signal is within the time window, the first signal is transmitted via the backscatter mode; otherwise, the first signal is transmitted via the active transmission mode.

In another example, if the first transmission mode is the active transmission mode, the time window is the active transmission time window. In this case, if the transmitting time of the first signal is within the time window, then the first signal is transmitted via the active transmission mode; otherwise, the first signal is transmitted via the backscatter mode.

In some embodiments, the coverage areas within which different types of zero-power terminals perform backscatter communication may be different. For example, a coverage area may be affected by factors such as an operating frequency, a receiver sensitivity of the target receiving device, a power consumption of backscatter communication, a path loss, and a power amplification factor of a zero-power terminal.

In an example where the target receiving device is a network device, the differences in uplink and downlink coverage areas for three types of zero-power terminals (denoted as UE1, UE2 and UE3) to perform the backscatter communication will be described.

UE1 does not have a power-storage capability and harvests power mainly from wireless radio frequency signals, and UE1 does not have an LNA.

UE2 has some power-storage capabilities and harvests power mainly from wireless radio frequency signals, and UE2 has an LNA.

UE3 can harvest power by using multiple types of power-harvesting manners (that is, in addition to harvest power from wireless radio frequency signals, UE3 may also harvest power from other ambient signals), and also has the power-storage capability; alternatively, UE3 has its own power supply and does not need to perform power harvesting. UE3 has an LNA.

Based on the above differences, requirements of these UEs for the minimum received power for receiving downlink signal in a descending order is UE1>UE2>UE3.

The maximum communication distances from UE to the network device in a descending order is UE3>UE2>UE1.

Accordingly, the maximum communication distances from the network device to the UEs in a descending order is UE3>UE2>UE1. For example, the operating frequency of the network device is 920 Mhz, the equivalent isotropiccally radiated power (EIRP) of the network device is 30 dBm, the receiver sensitivity of the network device is -95 dBm, antenna gains of the three types of zero-power terminals are all 2 dBi, and backscatter losses of the three types of zero-power terminals are all 5 dBm. In this case, the requirement of UE1 for the minimum received power for receiving downlink signal may be -20 dBm, the requirement of UE2 for the minimum received power for receiving downlink signal may be -30 dBm, and the requirement of UE3 for the minimum received power for receiving downlink signal may be -45 dBm. The maximum communication distance from the network device to UE1 is 10.33, the maximum communication distance from the network device to UE2 is 32.67, and the maximum communication distance from the network device to UE3 is 183.71.

If the power amplification factor of the LNA of UE3 is assumed to be 30 dBm, then the maximum communication distance from UE1 to the network device may be 103.31, the maximum communication distance from UE2 to the network device may be 32.67, and the maximum communication distance from UE3 to the network device may be 183.71.

It should be understood that, the above parameters, including an operating frequency of the network device at 920 Mhz, an equivalent isotropically radiated power (EIRP) of the network device in 30 dBm, a receiver sensitivity of the network device in -95 dBm, an antenna gain of each of the three types of zero-power terminals in 2dBi, and a backscatter loss of a zero-power terminal in 5 dBm, are only for illustration purpose. If the above parameters have other values, a parameter of the zero-power terminal, e.g., the maximum communication distance, also has different values.

Therefore, a coverage area for a zero-power terminal to perform backscatter communication is affected by the receiver sensitivity of the target receiving device, the transmit power of the backscatter signal and the path loss. The greater the transmit power of the backscatter signal, the greater the communication distance from the zero-power terminal to the target receiving device. The higher the receiver sensitivity of the target receiving device, the greater the communication distance from the zero-power terminal to the receiving device.

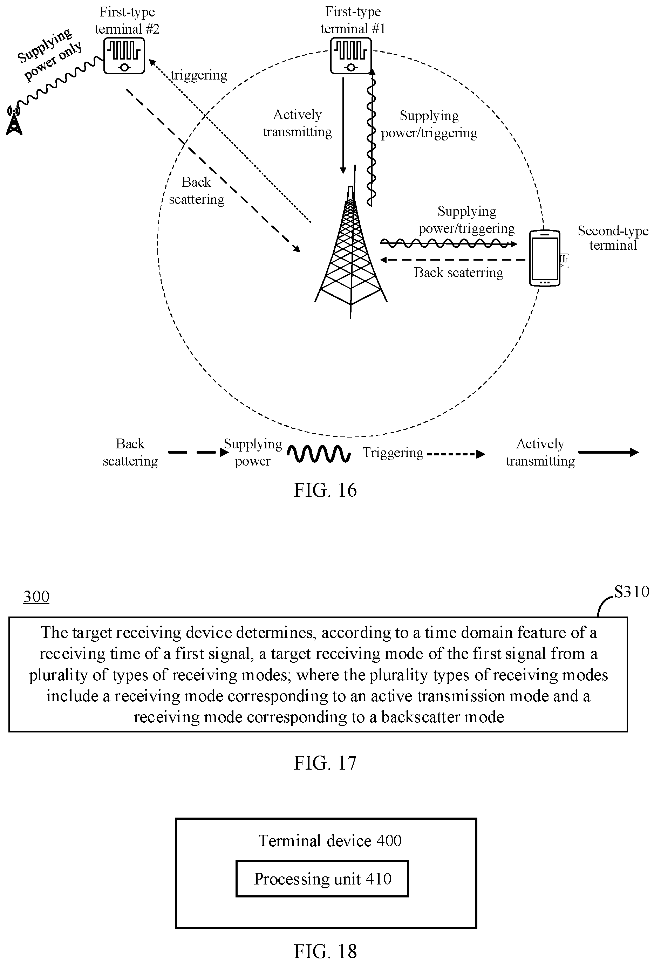

For example, in the scenario shown in FIG. 16, the communication system includes t a plurality of terminals supporting both the active transmission communication and the backscatter communication. The capabilities of these terminals may be different. For example, during the backscatter communication, some terminals use a LNA while others do not use the LAN. Alternatively, even if the different terminals all use a LAN to perform the backscatter communication, their respective LNAs have different capabilities. Alternatively, different terminals have different backscatter losses during the backscatter communication. For example, some terminals have a backscatter loss of 5 dB, while some other terminals have a backscatter of 8 dB. Therefore, the following cases may occur.

In Case 1, the first-type terminal #1 and the second-type terminal in FIG. 16 have the same distance to the network device, and radio frequency signals (used as carrier signals) received by the two terminals from the network device have the same strength. Since different terminals have different capabilities, if the first-type terminal #1 performs communication using the backscatter mode, the network device is not able to receive the transmitted signal or decode a received signal correctly. In contrast, if the second-type terminal performs communication using the backscatter mode, the network device is able to receive the transmitted signal and decode the received signal correctly.

In Case 2, the distances between the network device and the same type of terminals, e.g., the first-type terminal #1 and the first-type terminal #2 shown in FIG. 16, are different. If a third-party device can supply power or provide carrier signals (having a high strength value) to the first-type terminal #2 that is further away from the network device, the network device is able to receive the transmitted signal or decode the received signal correctly. In contrast, the first-type terminal #1 that is closer to the network device needs to perform communication using the active transmission mode.

Therefore, a coverage area for a zero-power terminal to perform backscatter communication is affected by the receiver sensitivity of the target receiving device, the transmit power of the backscatter signal and the path loss. The greater the transmit power of the backscatter signal, the greater the communication distance from the zero-power terminal to the target receiving device. The higher the receiver sensitivity of the target receiving device, the greater the communication distance from the zero-power terminal to the receiving device.

Another method for determining the target transmission mode of the first signal provided in the embodiments of the present application will be described below through Embodiment 4.

Embodiment 4

Embodiment 4 may be combined with any of Embodiment 1, Embodiment 2 and Embodiment 3 described above.

In Embodiment 4, when determining the target transmission mode of the first signal, the first terminal further considers whether a transmit power of a backscatter signal meets the requirement of a target received power of the target receiving device.

For example, in a case that the target transmission mode of the first signal is the backscatter mode and that the transmit power of the backscatter signal meets the requirement of the target received power of the target receiving device, the first signal is transmitted via the backscatter mode; otherwise, the first signal is transmitted via the active transmission mode, or via the active transmission mode and the backscatter mode.

In some embodiments, whether the transmit power of the backscatter signal meets the requirement of the target received power of the target receiving device may be determined based on the transmit power of the backscatter signal, a path loss, and the target received power of the target receiving device.

In some embodiments, in a case that the backscatter mode is determined as the target transmission mode of the first signal according to the time domain feature of the transmitting time of the first signal and that the transmit power of the backscatter signal meets a first condition, the first terminal transmits the first signal using the backscatter mode.

In some embodiments, in a case where the transmit power of the backscattered signal does not meet the first condition, the first terminal transmits the first signal using the active transmission mode.

In some embodiments, in a case where the transmit power of the backscatter signal does not meet the first condition, the first terminal transmits the first signal using the active transmission mode and the backscatter mode.

For example, the first terminal transmits a portion of bits in the information carried by the first signal via the backscatter mode, and transmits the remaining bits in the information carried by the first signal via the active transmission mode.

In another example, the first terminal transmits a portion of bits in the information carried by the first signal via the backscatter mode, and transmits all bits in the information carried by the first signal via the active transmission mode.

Optionally, if a received power of a backscatter signal reaching at the target receiving device, obtained by subtracting a path loss between the first terminal and the target receiving device from the transmit power of the backscatter signal, meets the requirement of the target received power of the target receiving device, the transmit power of the backscatter signal is considered to meet the first condition; otherwise, the transmit power of the backscatter signal is considered not to meet the first condition.

In some embodiments, the first condition includes that:

the transmit power of the backscatter signal is greater than a sum of the target received power of the target receiving device and the path loss between the first terminal and the target receiving device; or

the transmit power of the backscatter signal is greater than or equal to the sum of the target received power of the target receiving device and the path loss between the first terminal and the target receiving device.

For example, the backscatter mode is determined as the target transmission mode of the first signal, if the backscatter power of the backscatter signal meets the following formula:

$$P_{Backscatter} > P_{Backscatter, target} + PL_b \text{ or } P_{Backscatter} \geq P_{Backscatter, target} + PL_b \, ,$$

where $P_{Backscatter}$ denotes the backscatter power of the backscatter signal, $P_{Backscatter, target}$ denotes the target received power of the target receiving device, and $PL_b$ denotes the path loss between the first terminal and the target receiving device.

In another example, the active transmission mode is determined as the target transmission mode of the first signal, if the backscatter power of the backscattered signal meets the following formula:

$$P_{Backscatter} < P_{Backscatter, target} + PL_b \text{ or } P_{Backscatter} \leq P_{Backscatter, target} + PL_{b,f} \, ,$$

where $P_{Backscatter}$ denotes the backscatter power of the backscatter signal, $P_{Backscatter, target}$ denotes the target received power of the target receiving device, and $PL_b$ denotes the path loss between the first terminal and the target receiving device.

In some embodiments, the target received power of the target receiving device is predefined, for example, may be predefined in a protocol. That is to say, the first terminal and the target receiving device may obtain the target received power without information exchange.

In some other embodiments, the target received power of the target receiving device is configured by the target receiving device.

For example, the target receiving device is the network device, and the network device may configure the target received power for the first terminal.

In another example, the target receiving device is the second terminal, and the second terminal may configure the target received power for the first terminal.

In still other embodiments, the target received power of the target receiving device is configured by the network device.

For example, the target receiving device is the network device, and the network device configures the target received power for the first terminal.

In another example, the target receiving device is the second terminal, and the network device configures the target received power for the first terminal. Optionally, the network device may configure the target received power for the second terminal, or the first terminal may indicate the target received power to the second terminal.

In some embodiments, the target receiving device is the network device, and the target received power of the network device $P_{Backscatter,target}$ may refer to the target received power of the network device specific to carrier frequency $f$ and serving cell c, which is denoted as $P_{Backscatter,target,f,c}$. Optionally, the unit of the target received power is dBm.

In some embodiments, the target receiving device is the second terminal, and the target received power of the second terminal $P_{Backscatter,target}$ may refer to the target received power of the second terminal specific to carrier frequency $f$, which is denoted as $P_{Backscatter,target,f}$. Optionally, the unit of the target received power is dBm.

In some embodiments, the target received power of the target receiving device is a first received power, and the first received power is a target received power corresponding to the backscatter signal.

In some embodiments, a target received power corresponding to an actively transmitted signal is a second received power, and the second received power is the same as or different from the first received power.

That is, the actively transmitted signal and the backscatter signal may use the same target received power, or the actively transmitted signal and the backscatter signal may correspond to different target received power.

In some embodiments, the path loss may be generated during the communication between the first terminal and the target receiving device, which refers to a path loss of a signal in a process where the signal is sent from the first terminal until the signal is received by the target receiving device, or a path loss of a signal in the process where the signal is sent from the target receiving device until the signal is received by the first terminal.

In some embodiments, the path loss is a path loss corresponding to backscatter communication, for example, may be a path loss of a signal in a process where the signal is sent from the first terminal via the backscatter mode until the target receiving device receives the signal.

In some embodiments, the path loss may be measured by the target receiving device and indicated by the target receiving device to the first terminal.

In some other embodiments, the path loss is measured by the first terminal.

In a specific embodiment, in a case where the path loss is measured by the first terminal, the path loss may be measured by the auxiliary receiver, or may be measured by the primary receiver (e.g., in the case where the auxiliary receiver and the primary receiver share functional modules).

In some embodiments, the path loss may be determined based on a measurement result of a second signal, and a frequency of the second signal is a first frequency. The first frequency may be the same as a frequency of the backscatter communication, or may be different from the frequency of the backscatter communication.

For example, in a case where the first frequency and the frequency of the backscatter communication are the same, the path loss of the backscatter communication may be directly calculated according to the measurement result of the second signal.

In another example, in a case where the first frequency and the frequency of the backscatter communication are different, the path loss of the backscatter communication may be obtained by processing the measurement result of the second signal. For example, the measurement result may be processed based on an adjusting factor or an adjustment, so as to calculate the path loss of the backscatter communication.

In some embodiments, the target receiving device is the network device, and the second signal may be a downlink reference signal, such as a synchronization signal block (SSB), or a channel state information reference signal (CSI-RS).

In some embodiments, the target receiving device is the second terminal, and the second signal may be a sidelink reference signal, e.g., a sidelink position reference signal (SL-PRS).

In some embodiments, the path loss may be represented by the measurement result of the signal. For example, the measurement results may include but are not limited to: a reference signal received power (RSRP), reference signal received quality (RSRQ), a signal to interference plus noise ratio (SINR), and a received signal strength indication (RSSI). Optionally, the unit of the path loss may be dBm.

In some embodiments, the target receiving device is the network device, and the path loss $PL_b$ between the first terminal and the network device is also denoted as $PL_{b,f,c}$. Optionally, the first terminal may obtains $PL_{b,f,c}$ through performing measurement, for activated uplink (UL) bandwidth part (BWP) $b$ on carrier frequency $f$, on a backscatter communication associated downlink reference signal over an activated downlink BWP based on serving cell $c$.

In some embodiments, the target receiving device is the second terminal, and the path loss $PL_b$ between the first terminal and the second terminal is also denoted as $PL_{b,f}$. Optionally, the first terminal may obtain the path loss $PL_{b,f}$ through performing measurement, for activated sidelink (SL) BWP $b$ at carrier frequency $f$, on a backscatter communication associated sidelink reference signal over an activated sidelink BWP.

In some embodiments, the transmit power of the backscatter signal may refer to a power of the backscatter signal finally transmitted by the first terminal when performing backscatter communication.

In some embodiments, the transmit power of the backscatter signal may be less than, equal to, or greater than an incident power of the carrier signal.

For example, the first terminal may perform backscatter directly based on the carrier signal when performing backscatter communication. Since the backscatter communication will cause a certain loss, the transmit power of the backscatter signal is usually less than the incident power of the carrier signal.

For example, the first terminal may further amplify the backscatter signal when performing backscatter communication. In this case, the transmit power of the backscatter signal may be greater than or equal to the incident power of the carrier signal.

It can be seen that the transmit power of the backscatter signal is related to factors such as the power of the carrier signal, the gain of the first terminal, and the loss caused by the backscatter communication.

The method for determining the transmit power of the backscatter signal will be described below.

In some embodiments of the present application, the transmit power of the backscatter signal is determined according to the power of the carrier signal and a first gain.

In some embodiments, the first gain is a gain of the transmit power of the backscatter signal relative to the power of the carrier signal.

For example, the sum of the power of the carrier signal and the first gain may be determined as the transmit power of the backscatter signal.

It should be understood that the source of the carrier signal is not limited in the embodiments of the present application. For example, the carrier signal may be a dedicated carrier signal. Alternatively, other signals may be used as the carrier signal, such as a radio signal in the ambient, or a signal carrying the scheduling information of the first signal. Optionally, the dedicated carrier signal may be provided by the network device, or provided by the target receiving device, or provided by a third-party device.

In some embodiments, the first gain includes at least one of the following:

a loss $UE_{Backscatter,loss}$ caused by backscatter communication performed by the first terminal, an antenna gain $UE_{Gain,antenma}$ of the first terminal, a low noise amplifier (LNA) gain $UE_{Gain,LNA}$ of the first terminal, a power-storage related gain $UE_{Gain,Power}$ of the first terminal, or other gains $UE_{Gain,other}$ of the first terminal.

The loss $UE_{Backscatter,loss}$ caused by backscatter communication performed by the first terminal includes, but is not limited to, the loss caused by the backscatter communication itself, and optionally, may further include a loss caused by other circuit hardware during the backscatter communication.

$UE_{Gain,Power}$ may include a power gain obtained by the first terminal through the battery, power storing, or other ambient power harvesting manners.

$UE_{Gain,other}$ may refer to other gains except those mentioned above.

It should be understood that the LNA gain of the first terminal may be understood as a power amplification gain of the first terminal, i.e., a gain derived from amplifying process performed by the first terminal on the backscatter signal. The gain may be caused by an LNA, a PA, or a device with a power amplification function such as a transistor, or a tunnel diode, which is not limited in the present application.

In some embodiments, the first gain $UE_{Gain1}$ meets the following formula (1):

$$UE_{Gain1} = -UE_{Backscatter,loss} + UE_{Gain,antenma} + UE_{Gain,LNA} + UE_{Gain,Power} + UE_{Gain,other} \quad \text{formula (1)}$$

In some embodiments, the transmit power of the backscatter signal meets the following formula (2):

$$P_{Backscatter} = P_{Carrier} + UE_{Gain1} \quad \text{formula (2)},$$

where $P_{Backscatter}$ denotes the transmit power of the backscatter signal, $P_{Carrier}$ denotes the power of the carrier signal, and $UE_{Gain1}$ denotes the first gain.

In some other embodiments of the present application, the transmit power of the backscatter signal is determined according to the power of the carrier signal, a loss caused by the backscatter communication performed by first terminal, and the second gain.

In some embodiments, the loss caused by backscatter communication performed by the first terminal may include, but is not limited to, the loss caused by the backscatter communication itself, and optionally, may further include the loss caused by other circuit hardware during the backscatter communication.

In some embodiments, the second gain is a gain derived from backscatter communication performed by the first terminal.

In some embodiments, the second gain includes at least one of the following:

an antenna gain $UE_{Gain,antenma}$ of the first terminal, an LNA gain $UE_{Gain,LNA}$ of the first terminal, a power-storage related gain $UE_{Gain,Power}$ of the first terminal, or other gains $UE_{Gain,other}$ of the first terminal;
where description related to the above gain included in the second gain may be referred to the description about corresponding gain in manner 1, which will not be repeated here.

In some embodiments, the second gain meets the following formula (3):

$$UE_{Gain2} = UE_{Gain,antenma} + UE_{Gain,LNA} + UE_{Gain,Power} + UE_{Gain,other} \quad \text{formula (3)}$$

In some embodiments, the transmit power of the backscatter signal meets the following formula (4):

$$P_{Backscatter} = P_{Carrier} - UE_{Backscatter,loss} + UE_{Gain2} \quad \text{formula (4)}$$

where $P_{Backscatter}$ denotes the transmit power of the backscatter signal, $P_{Carrier}$ denotes the power of the carrier signal, $UE_{Gain2}$ denotes the second gain, and $UE_{Backscatter,loss}$ denotes the loss caused by backscatter communication performed by the first terminal.

In summary, in the embodiments of the present application, when the first terminal supporting dual-mode transmission is going to transmit a signal, the first terminal selects the target transmission mode according to the time domain feature of the transmitting time of the signal to be transmitted, which is beneficial to balancing terminal power saving and reliable transmission of signals.

With reference to FIGS. 7 to 16, a wireless communication method according to the embodiments of the present application is described above in detail from the perspective of the first terminal. With reference to FIG. 17, a wireless communication method according to another embodiment of the present application will be described below in detail from the perspective of the target receiving device. It should be understood that the description related to the target receiving device side corresponds to the description related to the first terminal side, and similar descriptions can be found above, which will not be repeated here for brevity.

FIG. 17 is a schematic flow chart of a wireless communication method 300 according to another embodiment of the present application. As shown in FIG. 11, the method 300 includes the following contents.

In S310, the target receiving device determines a target receiving mode of a first signal from a plurality of types of receiving modes according to a time domain feature of a receiving time of the first signal; where the plurality of types of receiving modes include a receiving mode corresponding to an active transmission mode and a receiving mode corresponding to a backscatter mode, and the target receiving device is a receiving device of the first signal.

In some embodiments, the target receiving device includes a primary receiver (also called the conventional receiver) and an auxiliary receiver. The power consumption of the primary receiver is higher than that of the auxiliary receiver, and/or the complexity of the primary receiver is higher than that of the auxiliary receiver.

Optionally, the primary receiver may be used to receive a signal transmitted through the active transmission mode.

Optionally, the primary receiver may have a relative high information processing capability, such as supporting a large bandwidth (e.g., 100 MHz), or receiving and processing high-rate information.

Optionally, the auxiliary receiver may be used to receive the signal transmitted through the backscatter mode.

Optionally, the auxiliary receiver may have a relative low capability information processing capability, such as only supporting a narrowband, or receiving and processing low-rate information.

In some embodiments, the primary receiver and the auxiliary receiver may be independent modules; alternatively, the primary receiver and the auxiliary receiver may include different functional modules of the receiver of the target receiving device; alternatively, the primary receiver and the auxiliary receiver may share different functional modules.

In some embodiments, the target receiving device includes only one receiver, which is used to receive signals transmitted through the active transmission mode and signals transmitted through the backscatter mode. In other words, the main receiver and the auxiliary receiver are the same receiver.

In some embodiments, for example, the receiving mode corresponding to the active transmission mode may refer to a demodulation manner corresponding to a high-order modulation manner, or in other words, a demodulation manner corresponding to a high-complexity modulation manner. Optionally, the demodulation manner corresponding to the high-order modulation manner may be a processing such as an OFDM demodulation, or channel estimation.

In some embodiments, for example, the receiving mode corresponding to the backscatter mode may refer to a demodulation manner corresponding to a low-order modulation manner, or in other words, a demodulation mode corresponding to a low-complexity modulation manner. Optionally, the demodulation manner corresponding to the low-order modulation manner may be ASK demodulation, PSK demodulation, or OOK demodulation.

In some embodiments, that the target receiving device receives the first signal using the receiving mode corresponding to the active transmission mode may include that:

the target receiving device receives the first signal through the primary receiver.

In some embodiments, that the target receiving device receives the first signal using the receiving mode corresponding to the backscatter mode may include that:

the target receiving device receives the first signal through the auxiliary receiver.

In some embodiments, the time domain feature of the receiving time of the first signal may include a time domain resource type corresponding to the receiving time of the first signal.

In some embodiments, time domain resources for backscatter communication and time domain resources for active transmission communication are distributed based on a first pattern.

In some embodiments, the first pattern is predefined; or

the first pattern is configured by a network device.

In some embodiments, the first pattern is periodic.

In some embodiments, a position of the first pattern is fixed or variable.

In some embodiments, a reference for determining the position of the first pattern is a first time domain position.

In some embodiments, the start position of the first pattern is the first time domain position; or

the start position of the first pattern is a second time domain position, and the second time domain position has a first offset relative to the first time domain position.

In some embodiments, the first time domain position is a time domain position where the scheduling information of the first signal is located.

In some embodiments, the method 300 further includes:

transmitting, by the target receiving device, first indication information to the first terminal; where the first indication information is used for indicating the first time domain position.

In some embodiments, the first indication information is carried in the scheduling information of the first signal, or may be carried in other information.

In some embodiments, the first pattern is represented by a first bitmap, the first bitmap includes a plurality of bit groups, each bit group includes one or more bits, each bit group corresponds to N time units, and a value of each bit group is used to indicate the resource type of corresponding N time units; where N is a positive integer.

In some embodiments, the value of each bit group is used to indicate that the corresponding N time units are time domain resources for backscatter communication, or time domain resources for active transmission communication, or flexible time domain resources; or

the value of each bit group is used to indicate whether the corresponding N time units are time domain resources for backscatter communication or time domain resources for active transmission communication.

In some embodiments, S310 may include:

determining the target receiving mode of the first signal according to the time domain resource type corresponding to the receiving time of the first signal in the first pattern.

In some embodiments, determining the target receiving mode of the first signal according to the time domain resource type corresponding to the receiving time of the first signal in the first pattern includes:

determining that the target receiving mode of the first signal is the receiving mode corresponding to the backscatter mode, if the time domain resource type corresponding to the receiving time of the first signal in the first pattern is time domain resources for backscatter communication; or

determining that the target receiving mode of the first signal is the receiving mode corresponding to the active transmission mode, if the time domain resource type corresponding to the receiving time of the first signal in the first pattern is time domain resources for active transmission communication.

In some embodiments, the method 300 further includes:

receiving the first signal on time domain resources for backscatter communication, if the target receiving mode of the first signal is the receiving mode corresponding to the backscatter mode; or

receiving the first signal on time domain resources for backscatter communication and time domain resources for active transmission communication, if the target receiving mode of the first signal is the receiving mode corresponding to the backscatter mode.

In some embodiments, the method 300 further includes:

receiving the first signal on time domain resource for active transmission communication, if the target receiving mode of the first signal is the receiving mode corresponding to the active transmission mode; or

receiving the first signal in the time domain resources for active transmission communication and time domain resources for backscatter communication, if the target receiving mode of the first signal is the receiving mode corresponding to the active receiving mode.

In some embodiments, time domain resources for backscatter communication and time domain resources for active transmission communication are determined based on a switching time of transmission modes, and the switching time of transmission modes includes a switching time from the active transmission mode to the backscatter mode and/or a switching time from the backscatter mode to the active transmission mode.

In some embodiments, that the terminal device determines the target receiving mode of the first signal from the plurality of types of receiving modes according to the time domain feature of the receiving time of the first signal includes:

determining the target transmission mode corresponding to the receiving time of the first signal according to the transmission modes before and after the switching time; and

determining the receiving mode corresponding to the target transmission mode as the target receiving mode of the first signal.

In some embodiments, the switching time is periodic.

In some embodiments, a position of the switching time is fixed or variable.

In some embodiments, a reference for determining the position of the switching time is a third time domain position.

In some embodiments, a start position of the switching time is the third time domain position; or

the start position of the switching time is a fourth time domain position, and the fourth time domain position has a second offset relative to the third time domain position.

In some embodiments, the third time domain position is a time domain position where scheduling information of the first signal is located.

In some embodiments, the method further includes:

transmitting, by the target receiving device, second indication information to the first terminal; where the second indication information is used for indicating the third time domain position.

In some embodiments, the second indication information is carried in the scheduling information of the first signal.

In some embodiments, time domain resources for backscatter communication and time domain resources for active transmission communication are determined based on a time window. The time window corresponds to a first transmission mode, which is the active transmission mode or the backscatter mode.

In some embodiments, the first transmission mode is the backscatter mode, time domain resources within the time window are used for backscatter communication, and time domain resources outside the time window are used for active transmission communication; or

the first transmission mode is the backscatter mode, time domain resources within the time window are used by the terminal device to initiate backscatter communication, and time domain resources outside the time window are used for active transmission communication and/or the backscatter communication.

In some embodiments, the first transmission mode is the active transmission mode, the time domain resources within the time window are used for active transmission communication, and the time domain resources outside the time window are used for backscatter communication; or

the first transmission mode is the active transmission mode, the time domain resources within the time window are used by the terminal device to initiate active transmission communication, and the time domain resources outside the time window are used for active transmission communication and/or backscatter communication.

In some embodiments, the time window is predefined; or

the time window is configured by the network device.

In some embodiments, the time window is periodic.

In some embodiments, a position of the time window is fixed or variable.

In some embodiments, the position of the time window is determined according to first information, and the first information includes at least one of the following:

a time length of the time window, a start position of the time window, an end position of the time window, an offset of the start position of the time window relative to a reference time domain position, an offset of the end position of the time window relative to the reference time domain position, period information of the time window, or a ratio of the time length of the time window to a period of the time window.

In some embodiments, that the target receiving device determines the target receiving mode of the first signal from a plurality of types of receiving modes according to the time domain feature of the receiving time of the first signal includes:

determining to receive the first signal using the receiving mode corresponding to the first transmission mode, if the receiving time of the first signal is within the time window; or

determining to receive the first signal using the receiving mode corresponding to a second transmission mode, if the receiving time of the first signal is not within the time window; where the second transmission mode is different from the first transmission mode.

It should be understood that reference may be made to relevant description in the method 200 for the specific implementations of the first pattern, the switching time and the time window in the method 300, which will not repeated for the sake of brevity.

The method embodiments of the present application are described above in detail with reference to FIGS. 6 to 17. The device embodiments of the present application will be described below in detail with reference to FIGS. 18 to 22. It should be understood that the device embodiments and the method embodiments correspond to each other, and reference may be made to the method embodiments for similar descriptions.

FIG. 18 shows a schematic block diagram of a terminal device 400 according to the embodiments of the present application. As shown in FIG. 18 , the terminal device 400 includes:

a processing unit 410, configured to determine a target transmission mode of the first signal from a plurality of types of transmission modes according to a time domain feature of a transmitting time of the first signal; where the plurality of types of transmission modes include an active transmission mode and a backscatter mode.

In some embodiments, the time domain feature of the transmitting time of the first signal includes a time domain resource type corresponding to the transmitting time of the first signal.

In some embodiments, time domain resources for the backscatter communication and time domain resources for the active transmission communication are distributed based on a first pattern.

In some embodiments, the first pattern is predefined, or

the first pattern is configured by a target receiving device of the first signal, or
the first pattern is configured by a network device.

In some embodiments, the first pattern is periodic.
In some embodiments, a position of the first pattern is fixed or variable.
In some embodiments, a reference for determining the position of the first pattern is a first time domain position.
In some embodiments, the start position of the first pattern is the first time domain position; or the start position of the first pattern is a second time domain position, and the second time domain position has a first offset relative to the first time domain position.
In some embodiments, the first offset is predefined, or

the first offset is configured by the target receiving device of the first signal, or
the first offset is configured by the network device.

In some embodiments, the first time domain position is a time domain position at which the terminal device receives scheduling information of the first signal; or the first time domain position is a time domain position indicated by the target receiving device of the first signal or the network device.
In some embodiments, the first pattern is represented by a first bitmap, the first bitmap includes a plurality of bit groups, each bit group includes one or more bits, each bit group corresponds to N time units, and a value of each bit group is used to indicate a resource type of corresponding N time units; where N is a positive integer.
In some embodiments, the value of each bit group is used to indicate that the corresponding N time units are time domain resources for backscatter communication, or time domain resources for active transmission communication, or flexible time domain resources; or the value of each bit group is used to indicate whether the corresponding N time units are time domain resources for backscatter communication or time domain resources for active transmission communication.
In some embodiments, the processing unit 410 is further configured to: determine the target transmission mode of the first signal according to the time domain resource type corresponding to the transmitting time of the first signal in the first pattern.
In some embodiments, the processing unit 410 is further configured to:

determine that the target transmission mode of the first signal is the backscatter mode, if the time domain resource type corresponding to the transmitting time of the first signal in the first pattern is time domain resources for backscatter communication; or
determine that the target transmission mode of the first signal is the active transmission mode, if the time domain resource type corresponding to the transmitting time of the first signal in the first pattern is time domain resources for active transmission communication.

In some embodiments, the terminal device further includes:

a communication unit configured to: transmit the first signal on time domain resources used for backscatter communication in a case that the target transmission mode of the first signal is the backscatter mode; or transmit the first signal in the time domain resources used for backscatter communication and time domain resources used for active transmission communication in a case that the target transmission mode of the first signal is the backscatter mode.

In some embodiments, the terminal device further includes:

a communication unit configured to: transmit the first signal on time domain resources for active transmission communication in a case that the target transmission mode of the first signal is the active transmission mode; or transmit the first signal on time domain resources for active transmission communication and time domain resources for backscatter communication in a case that the target transmission mode of the first signal is the active transmission mode

In some embodiments, the processing unit 410 is further configured to: determine the target transmission mode of the first signal according to the time domain resource type corresponding to the transmitting time of the first signal in the first pattern and a size of remaining time domain resources with the (same) time domain resource type after the transmitting time.

In some embodiments, the processing unit 410 is further configured to:

if the time domain resource type corresponding to the transmitting time of the first signal is time domain resources for backscatter communication, determine the target transmission mode of the first signal according to whether the size of remaining time domain resources for backscatter communication meets a backscatter communication duration required by the first signal; or

if the time domain resource type corresponding to the transmitting time of the first signal is time domain resources for active transmission communication, determine the target transmission mode of the first signal according to whether the size of the remaining time domain resources for active transmission communication meets the active transmission communication duration required by the first signal.

In some embodiments, the processing unit 410 is further configured to:

determine to transmit the first signal using the backscatter mode if the size of the remaining time domain resources for backscatter communication meets the backscatter communication duration of the first signal; or

determine to transmit the first signal using the active transmission mode, or determine to transmit the first signal using the backscatter mode and the active transmission mode, if the size of the remaining time domain resources for backscatter communication does not meet the backscatter communication duration of the first signal.

In some embodiments, the processing unit 410 is further configured to:

determine to transmit the first signal using the active transmission mode if the size of the remaining time domain resources used for active transmission communication meets the active transmission communication duration of the first signal; or

determine to transmit the first signal using the backscatter mode, or determine to transmit the first signal using the active transmission and backscatter mode, if the size of the remaining time domain resources used for active transmission communication does not meet the active transmission communication duration of the first signal.

In some embodiments, time domain resources for backscatter communication and time domain resources for active transmission communication are determined based on a switching time of transmission modes. The switching time of transmission modes includes a switching time from the active transmission mode to the backscatter mode and/or a switching time from the backscatter mode to the active transmission mode.

In some embodiments, the processing unit 410 is further configured to:

determine the transmission mode corresponding to the transmitting time of the first signal according to transmission modes before and after the switching time; and

determining the transmission mode corresponding to the transmitting time as the target transmission mode of the first signal.

In some embodiments, the switching time is predefined; or

the switching time is configured by the network device; or

the switching time is configured by the target receiving device of the first signal.

In some embodiments, the switching time is periodic.

In some embodiments, a position of the switching time is fixed or variable.

In some embodiments, a reference for determining the position of the switching time is a third time domain position.

In some embodiments, the start position of the switching time is the third time domain position; or

the start position of the switching time is a fourth time domain position, and the fourth time domain position has a second offset relative to the third time domain position.

In some embodiments, the second offset is predefined; or

the second offset is configured by the network device; or

the second offset is configured by the target receiving device of the first signal.

In some embodiments, the third time domain position is a time domain position at which the terminal device receives scheduling information of the first signal; or
the third time domain position is a time domain position indicated by the target receiving device of the first signal or the network device.

In some embodiments, time domain resources for backscatter communication and time domain resources for active transmission communication are determined based on a time window. The time window corresponds to a first transmission mode, and the first transmission mode is the active transmission mode or the backscatter mode.

In some embodiments, the first transmission mode is the backscatter mode, time domain resources within the time window are used for backscatter communication, and time domain resources outside the time window are used for active transmission communication; or
the first transmission mode is the backscatter mode, time domain resources within the time window are used by the terminal device to initiate the backscatter communication, and time domain resources outside the time window are used for the active transmission communication and/or the backscatter communication.

In some embodiments, the first transmission mode is the active transmission mode, time domain resources within the time window are used for the active transmission communication, and time domain resources outside the time window are used for the backscatter communication; or
the first transmission mode is the active transmission mode, time domain resources within the time window are used by the terminal device to initiate the active transmission communication, and time domain resources outside the time window are used for the active transmission communication and/or the backscatter communication.

In some embodiments, the time window is predefined; or

the time window is configured by the network device; or
the time window is configured by the target receiving device of the first signal.

In some embodiments, the time window is periodic.
In some embodiments, a position of the time window is fixed or variable.
In some embodiments, the position of the time window is determined according to first information, and the first information includes at least one of the following:
a time length of the time window, a start position of the time window, an end position of the time window, an offset of the start position of the time window relative to a reference time domain position, an offset of the end position of the time window relative to the reference time domain position, period information of the time window, or a ratio of the time length of the time window to a period of the time window.

In some embodiments, the first information is predefined; or

the first information is configured by the network device; or
the first information is configured by the target receiving device of the first signal.

In some embodiments, the processing unit 410 is further configured to:

determine to transmit the first signal using the first transmission mode, if the transmitting time of the first signal is within the time window; or
determine to transmit the first signal using a second transmission mode, if the transmitting time of the first signal is not within the time window; where the second transmission mode is different from the first transmission mode.

In some embodiments, the processing unit 410 is further configured to:

in a case that the transmit power of the backscatter signal meets a first condition and that the target transmission mode of the first signal determined according to the time domain feature of the transmitting time of the first signal is the backscatter mode, transmit the first signal using the backscatter mode; or
in a case that the transmit power of the backscatter signal does not meet the first condition, transmit the first signal using the active transmission mode; or
in a case that the transmit power of the backscatter signal does not meet the first condition, transmit the first signal using the active transmission mode and the backscatter mode.

In some embodiments, the first condition includes that:

the transmit power of the backscatter signal is greater than the sum of a target received power of the target receiving device and a path loss between the terminal device and the target receiving device; or

the transmit power of the backscatter signal is greater than or equal to the sum of the target received power of the target receiving device and the path loss between the terminal device and the target receiving device.

In some embodiments, the transmit power of the backscatter signal is determined according to a power of the carrier signal and a first gain, and the first gain is a gain of the transmit power of the backscatter signal relative to the power of the carrier signal; or

the transmit power of the backscatter signal is determined according to the power of the carrier signal, the loss caused by the backscatter communication performed by the terminal device, and a second gain, and the second gain is a gain derived from backscatter communication performed by the terminal device.

In some embodiments, the first gain includes at least one of the following:

the loss caused by the backscatter communication performed by the terminal device, an antenna gain of the terminal device, a low noise amplifier (LNA) gain of the terminal device, or a power-storage related gain of the terminal device.

In some embodiments, the second gain includes at least one of the following:

the antenna gain of the terminal device, the LNA gain of the terminal device, or the power-storage related gain of the terminal device.

In some embodiments, the transmit power of the backscatter signal meets the following formula:

$$P_{Backscatter} = P_{Carrier} + UE_{Gain1} ,$$

where $P_{Backscatter}$ denotes the transmit power of the backscatter signal, $P_{Carrier}$ denotes the power of the carrier signal, and $UE_{Gain1}$ denotes the first gain.

In some embodiments, the transmit power of the backscatter signal meets the following formula:

$$P_{Backscatter} = P_{Carrier} - UE_{Backscatter,loss} + UE_{Gain2} ,$$

where $P_{Backscatter}$ denotes the transmit power of the backscatter signal, $P_{Carrier}$ denotes the power of the carrier signal, $UE_{Gain2}$ denotes the second gain, and $UE_{Backscatter,loss}$ denotes the loss caused by backscatter communication performed by the first terminal.

In some embodiments, the carrier signal is a signal used to carry the scheduling information of the first signal; or the carrier signal is a dedicated carrier signal.

In some embodiments, the transmitting time of the first signal is indicated by the network device or determined by the terminal device.

In some embodiments, the terminal device includes a first transmitter and a second transmitter. The first transmitter supports transmitting the signal using the active transmission mode, and the second transmitter supports transmitting the signal using the backscatter transmission mode.

Optionally, in some embodiments, the communication unit may be a communication interface or a transceiver, or an input/output interface of a communication chip or a system on chip. The processing unit mentioned above may include one or more processors.

It should be understood that the terminal device 400 according to the embodiments of the present application may correspond to the first terminal in the methods embodiment of the present application, and the above-mentioned and other operations and/or functions of each unit in the terminal device 400 are respectively for implementing the corresponding processes of the first terminal in the method shown in FIGS. 6 to 17, which will not be repeated here for the sake of brevity.

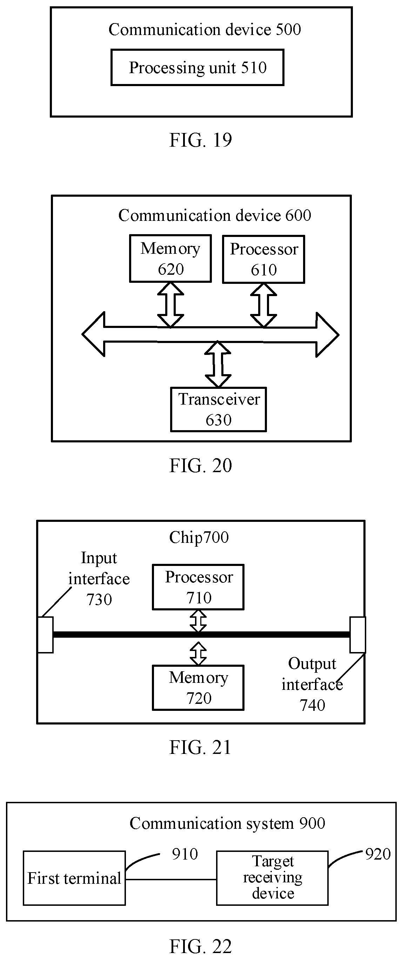

FIG. 19 shows a schematic block diagram of a communication device 500 according to the embodiments of the present application. As shown in FIG. 19 , the communication device 500 includes:

a processing unit 510, configured to determine a target receiving mode of the first signal from a plurality of types of receiving modes according to a time domain feature of a receiving time of the first signal; where the plurality of types of receiving modes include a receiving mode corresponding to an active transmission mode and a receiving mode corresponding to a backscatter mode.

In some embodiments, the time domain feature of the transmitting time of the first signal includes a time domain resource type corresponding to the transmitting time of the first signal.

In some embodiments, time domain resources for backscatter communication and time domain resources for active transmission communication are distributed based on a first pattern.

In some embodiments, the first pattern is predefined; or the first pattern is configured by a network device.

In some embodiments, the first pattern is periodic.

In some embodiments, a position of the first pattern is fixed or variable.

In some embodiments, a reference for determining the position of the first pattern is a first time domain position.

In some embodiments, the start position of the first pattern is the first time domain position; or the start position of the first pattern is a second time domain position, and the second time domain position has a first offset relative to the first time domain position.

In some embodiments, the first time domain position is a time domain position where scheduling information of the first signal is located.

In some embodiments, the communication device further includes:
a communication unit, configured to transmit first indication information to a terminal device; where the first indication information is used for indicating the first time domain position.

In some embodiments, the first indication information is carried in the scheduling information of the first signal.

In some embodiments, the first pattern is represented by a first bitmap, the first bitmap includes a plurality of bit groups, each bit group includes one or more bits, each bit group corresponds to N time units, and a value of each bit group is used to indicate the resource type of the corresponding N time units; where N is a positive integer.

In some embodiments, the value of each bit group is used to indicate that the corresponding N time units are time domain resources for the backscatter communication, or time domain resources for the active transmission communication, or flexible time domain resources; or
the value of each bit group is used to indicate whether the corresponding N time units are time domain resources for the backscatter communication or time domain resources for the active transmission communication.

In some embodiments, the processing unit 510 is further configured to:
determine the target receiving mode of the first signal according to the time domain resource type corresponding to the receiving time of the first signal in the first pattern.

In some embodiments, the processing unit 510 is further configured to:

if the time domain resource type corresponding to the receiving time of the first signal in the first pattern is time domain resources for backscatter communication, determine that the target receiving mode of the first signal is the receiving mode corresponding to the backscatter mode; or
if the time domain resource type corresponding to the receiving time of the first signal in the first pattern is time domain resources for active transmission communication, determine that the target receiving mode of the first signal is the receiving mode corresponding to the active receiving mode.

In some embodiments, the communication device further includes:

a communication unit configured to: receive the first signal on time domain resources ,for backscatter communication in a case that the target receiving mode of the first signal is the receiving mode corresponding to the backscatter mode; or
receive the first signal on time domain resources for backscatter communication and time domain resources for active transmission communication in a case that the target receiving mode of the first signal is the receiving mode corresponding to the backscatter mode .

In some embodiments, the communication device further includes:

a communication unit configured to: receive the first signal on the time domain resource for active transmission communication in a case where the target receiving mode of the first signal is the receiving mode corresponding to the active receiving mode, or
receive the first signal on the time domain resources for active transmission communication and the time domain resources for backscatter communication in a case that the target receiving mode of the first signal is the receiving mode corresponding to the active receiving mode .

In some embodiments, time domain resources for backscatter communication and time domain resources for active transmission communication are determined based on the switching time of transmission modes, where the switching time of transmission modes includes the switching time from the active transmission mode to the backscatter mode and/or the switching time from the backscatter mode to the active transmission mode.

In some embodiments, the processing unit 510 is further configured to:

determine the target transmission mode corresponding to the receiving time of the first signal according to transmission modes before and after the switching time; and
determine the receiving mode corresponding to the target transmission mode as the target receiving mode of the first signal.

In some embodiments, the switching time is periodic.

In some embodiments, a position of the switching time is fixed or variable.

In some embodiments, a reference for determining the position of the switching time is a third time domain position.

In some embodiments, a start position of the switching time is the third time domain position; or the start position of the switching time is a fourth time domain position, and the fourth time domain position has a second offset relative to the third time domain position.

In some embodiments, the third time domain position is a time domain position where the scheduling information of the first signal is located.

In some embodiments, the communication device further includes:

a communication unit, configured to transmit second indication information to the first terminal; where the second indication information is used for indicating the third time domain position.

In some embodiments, the second indication information is carried in scheduling information of the first signal.

In some embodiments, time domain resources for backscatter communication and time domain resources for active transmission communication are determined based on a time window. The time window corresponds to a first transmission mode, which is the active transmission mode or the backscatter mode.

In some embodiments, the first transmission mode is the backscatter mode, time domain resources within the time window are used for the backscatter communication, and time domain resources outside the time window are used for the active transmission communication; or the first transmission mode is the backscatter mode, time domain resources within the time window are used by the first terminal to initiate the backscatter communication, and time domain resources outside the time window are used for the active transmission communication and/or the backscatter communication.

In some embodiments, the first transmission mode is the active transmission mode, time domain resources within the time window are used for the active transmission communication, and time domain resources outside the time window are used for the backscatter communication; or the first transmission mode is the active transmission mode, time domain resources within the time window are used by the first terminal to initiate the active transmission communication, and time domain resources outside the time window are used for the active transmission communication and/or the backscatter communication.

In some embodiments, the time window is predefined; or the time window is configured by the network device.

In some embodiments, the time window is periodic.

In some embodiments, a position of the time window is fixed or variable.

In some embodiments, the position of the time window is determined according to first information, and the first information includes at least one of the following:

a time length of the time window, a start position of the time window, an end position of the time window, an offset of the start position of the time window relative to the reference time domain position, an offset of the end position of the time window relative to a reference time domain position, period information of the time window, or a ratio of the time length of the time window to a period of the time window.

In some embodiments, the processing unit 510 is further configured to:

determine that the target receiving mode of the first signal is the receiving mode corresponding to the first transmission mode, if the receiving time of the first signal is within the time window; or determine that the target receiving mode of the first signal is the receiving mode corresponding to a second transmission mode, if the receiving time of the first signal is not within the time window; where the second transmission mode is different from the first transmission mode.

It should be understood that the communication device 500 according to the embodiments of the present application may correspond to the target receiving device in the method embodiments of the present application, and the above-mentioned and other operations and/or functions of each unit in the communication device 500 are respectively for implementing the corresponding processes of the target receiving device in the method shown in FIGS. 6 to 17, which will not be repeated here for the sake of brevity.

FIG. 20 is a schematic structural diagram of a communication device 600 according to embodiments of the present application. The communication device 600 shown in FIG. 20 includes a processor 610. The processor 610 invokes and runs a computer program from a memory to implement the methods in the embodiments of the present application.

Optionally, as shown in FIG. 20, the communication device 600 may further include a memory 620. The processor 610 invokes and runs a computer program from the memory 620 to implement the methods in the embodiments of the present application.

The memory 620 may be a separate device independent of the processor 610 or may be integrated into the processor 610.

Optionally, as shown in FIG. 20, the communication device 600 may further include a transceiver 630, and the processor 610 may control the transceiver 630 to communicate with other devices. Specifically, the processor 610 may control the transceiver 630 to transmit information or data to other devices, or receive information or data transmitted by other devices.

The transceiver 630 may include a transmitter and a receiver. The transceiver 630 may further include antenna(s), and the number of antenna(s) may be one or more.

Optionally, the communication device 600 may specifically be the target receiving device in the embodiments of the present application, and implement corresponding processes implemented by the target receiving device in various methods in the embodiments of the present application, which will not be repeated here for brevity.

Optionally, the communication device 600 may specifically be the first terminal in the embodiments of the present application, and implement corresponding processes implemented by the first terminal in various methods in the embodiments of the present application, which will not be repeated here for brevity.

FIG. 21 is a schematic structural diagram of a chip according to embodiments of the present application. The chip 700 shown in FIG. 21 includes a processor 710, and the processor 710 invokes and runs a computer program from a memory to implement the methods in the embodiments of the present application.

Optionally, as shown in FIG. 21, the chip 700 may further include a memory 720. The processor 710 invokes and runs a computer program from the memory 720 to implement the methods in the embodiments of the present application.

The memory 720 may be a separate device independent of the processor 710 or may be integrated into the processor 710.

Optionally, the chip 700 may further include an input interface 730. The processor 710 may control the input interface 730 to communicate with other devices or chips. Specifically, the processor 710 may control the input interface 730 to obtain information or data transmitted by other devices or chips.

Optionally, the chip 700 may further include an output interface 740. The processor 710 may control the output interface 740 to communicate with other devices or chips. Specifically, the processor 710 may control the output interface 740 to output information or data to other devices or chips.

Optionally, the chip may be applied to the target receiving device in the embodiments of the present application, and the chip may implement corresponding processes implemented by the target receiving device in various methods in the embodiments of the present application, which will not be repeated here for brevity.

Optionally, the chip may be applied to the first terminal in the embodiments of the present application, and the chip may implement corresponding processes implemented by the first terminal in various methods in the embodiments of the present application, which will not be repeated here for brevity.

It should be understood that the chip mentioned in the embodiments of the present application may be referred to as a system-level chip, a system chip, a chip system or a system-on-chip.

FIG. 22 is a schematic block diagram of a communication system 900 according to embodiments of the present application. As shown in FIG. 22, the communication system 900 includes a first terminal 910 and a second device 920.

The first terminal 910 may be configured to implement the corresponding functions implemented by the first terminal in the above methods, and the target receiving device 920 may be configured to implement the corresponding functions implemented by the target receiving device in the above methods, which will not be repeated here for brevity.

It should be understood that the processor in the embodiments of the present application may be an integrated circuit chip with a capability for processing signals. In an implementation process, various steps of the above method embodiments may be completed by an integrated logic circuit of hardware in a processor or instructions in a software form. The above processor may be a general-purpose processor, a digital signal processor (DSP), an application specific integrated circuit (ASIC), a field programmable gate array (FPGA) or another programmable logic device, a discrete gate or transistor logic device, or a discrete hardware component. The processor may implement various methods, steps and logical block diagrams disclosed in the embodiments of the present application. The general-purpose processor may be a microprocessor, or the processor may be any conventional processor. The steps of the methods disclosed in combination with the embodiments of the present application may be directly embodied by execution of a hardware decoding processor, or by execution of a combination of hardware and software modules in a decoding processor. The software module may be located in a storage medium commonly used in the art, such as a random access memory, a flash memory, a read-only memory, a programmable read-only memory or an electrically erasable programmable memory, or a register. The storage medium is located in a memory (memories), and the processor reads information in the memory (memories) and completes the steps of the above methods in combination with hardware of the processor.

It can be understood that, the memory in the embodiments of the present application may be a volatile memory or a non-volatile memory, or the memories may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not as a limitation, many forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DR RAM). It should be noted that the memories in the system and the methods described here are intended to include, but are not limited to, these and any other suitable types of memories.

It will be appreciated that the above memories are exemplary but are not limiting illustration. For example, the memory in embodiments of the present application may be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), or a direct rambus RAM (DR RAM). That is, the memories in the embodiments of the present application are intended to include, but are not limited to, these and any other suitable types of memories.

The embodiments of the present application further provide a computer-readable storage medium for storing a computer program.

Optionally, the computer-readable storage medium may be applied to the first terminal in the embodiments of the present application, and the computer program enables a computer to perform the corresponding processes implemented by the first terminal in the various methods in the embodiments of the present application, which will not be repeated here for brevity.

Optionally, the computer-readable storage medium may be applied to the target receiving device in the embodiments of the present application, and the computer program enables a computer to perform the corresponding processes implemented by the target receiving device in various methods in the embodiments of the present application, which will not be repeated here for brevity.

The embodiments of the present application further provide a computer program product including computer program instructions.

Optionally, the computer program product may be applied to the first terminal in the embodiments of the present application, and the computer program instructions enable a computer to perform the corresponding processes implemented by the first terminal in the various methods in the embodiments of the present application, which will not be repeated here for brevity.

Optionally, the computer program product may be applied to the target receiving device in the embodiments of the present application, and the computer program instructions enable a computer to perform the corresponding processes implemented by the target receiving device in various methods in the embodiments of the present application, which will not be repeated here for brevity.

The embodiments of the present application further provide a computer program.

Optionally, the computer program may be applied to the first terminal in the embodiments of the present application, and the computer program, when run on a computer, enables the computer to perform the corresponding processes implemented by the first terminal in various methods in the embodiments of the present application, which will not be repeated here for brevity.

Optionally, the computer program may be applied to the target receiving device in the embodiments of the present application, and the computer program, when run on a computer, enables the computer to perform the corresponding processes implemented by the target receiving device in various methods in the embodiments of the present application, which will not be repeated here for brevity.

Those ordinary skilled in the art will recognize that units and algorithm steps of various examples described in combination with the embodiments disclosed here may be implemented in electronic hardware or in a combination of computer software and electronic hardware. Whether these functions are implemented by way of hardware or software depends on a specific application and a design constraint of a technical solution. A skilled person may use different methods to implement the described functions for each specific application, but such implementation should not be considered beyond the scope of the present application.

It may be clearly understood by those skilled in the art that, for convenience and brevity of the description, the specific working processes of the system, apparatus and unit described above may refer to the corresponding processes in the above method embodiments, which will not be repeated here.

In the several embodiments provided in the application, it should be understood that the disclosed system, apparatus, and method may be implemented in other ways. For example, the apparatus embodiments described above are only illustrative. For example, division of the units is only a logical function division, and there may be other division manners in actual implementation. For example, multiple units or components may be combined or integrated into another system, or some features may be ignored or not executed. In addition, coupling or direct coupling or communication connection shown or discussed between each other may be indirect coupling or communication connection via some interfaces, apparatuses, or units, which may be electrical, mechanical, or in other forms.

The units described as separate components may be or may be not physically separated, and the components shown as units may be or may be not physical units (that is, they may be located in one place or may be distributed on multiple network units). Some or all of units may be selected according to actual needs to achieve purposes of solutions of the embodiments.

In addition, various functional units in various embodiments of the present application may be integrated in one processing unit, or various units may be physically present separately, or two or more units may be integrated in one unit.

The functions, if implemented in a form of software functional units and sold or used as an independent product, may be stored in a computer-readable storage medium. With such understanding, the technical solutions of the present application may be embodied in the form of a software product in essence, or a part of the technical solutions that contributes to the prior art or a part of the technical solutions may be embodied in the form of a software product. The computer software product is stored in one storage medium including several instructions for enabling a computer device (which may be a personal computer, a server, or a network device) to perform all or some of the steps of the methods described in various embodiments of the present application. The aforementioned storage medium includes a U disk, a mobile hard disk, a read-only memory (ROM), a random access memory (RAM), a magnetic disk, an optical disk, or any medium capable of storing program codes.

The foregoing descriptions are merely specific implementations of the present disclosure, but the protection scope of the present application is not limited thereto. Variations or replacements that any person skilled in the art could readily conceive of within the technical scope disclosed in the present application shall fall within the protection scope of the present application. Therefore, the protection scope of the present application should be subject to the protection scope of the claims.

**Claims**

1. A wireless communication method, comprising:
   determining, by a first terminal according to a time domain feature of a transmitting time of a first signal, a target transmission mode of the first signal from a plurality of types of transmission modes; wherein the plurality of types of transmission modes include an active transmission mode and a backscatter mode.

2. The method according to claim 1, wherein the time domain feature of the transmitting time of the first signal includes a time domain resource type corresponding to the transmitting time of the first signal.

3. The method according to claim 2, wherein time domain resources for backscatter communication and time domain resources for active transmission communication are distributed based on a first pattern.

4. The method according to claim 3, wherein

   the first pattern is predefined, or
   the first pattern is configured by a target receiving device of the first signal, or
   the first pattern is configured by a network device.

5. The method according to claim 3 or 4, wherein the first pattern is periodic.

6. The method according to any one of claims 3 to 5, wherein a position of the first pattern is fixed or variable.

7. The method according to claim 6, wherein a reference for determining the position of the first pattern is a first time domain position.

8. The method according to claim 7, wherein

   a start position of the first pattern is the first time domain position, or
   the start position of the first pattern is a second time domain position, and the second time domain position has a first offset relative to the first time domain position.

9. The method according to claim 8, wherein

   the first offset is predefined, or

the first offset is configured by a target receiving device of the first signal, or
the first offset is configured by the network device.

10. The method according to claim 8 or 9, wherein

the first time domain position is a time domain position at which the first terminal receives scheduling information of the first signal; or
the first time domain position is a time domain position indicated by a target receiving device of the first signal or a network device.

11. The method according to any one of claims 3 to 10, wherein the first pattern is represented by a first bitmap, the first bitmap includes a plurality of bit groups, each bit group includes one or more bits, each bit group corresponds to N time units, and a value of each bit group is used to indicate a resource type of corresponding N time units, wherein N is a positive integer.

12. The method according to claim 11, wherein

the value of each bit group is used to indicate that the corresponding N time units are time domain resources for backscatter communication, or time domain resources for active transmission communication, or flexible time domain resources; or
the value of each bit group is used to indicate whether the corresponding N time units are time domain resources for backscatter communication or time domain resources for active transmission communication.

13. The method according to any one of claims 3 to 12, wherein determining, by the first terminal according to the time domain feature of the transmitting time of the first signal, the target transmission mode of the first signal from the plurality of types of transmission modes comprises:
determining the target transmission mode of the first signal according to the time domain resource type corresponding to the transmitting time of the first signal in the first pattern.

14. The method according to claim 13, wherein determining the target transmission mode of the first signal according to the time domain resource type corresponding to the transmitting time of the first signal in the first pattern comprises:

determining that the target transmission mode of the first signal is the backscatter mode, if the time domain resource type corresponding to the transmitting time of the first signal in the first pattern is time domain resources for backscatter communication; or
determining that the target transmission mode of the first signal is the active transmission mode, if the time domain resource type corresponding to the transmitting time of the first signal in the first pattern is time domain resources for active transmission communication.

15. The method according to claim 14, wherein the method further comprises:

transmitting the first signal on time domain resources for backscatter communication, if the target transmission mode of the first signal is the backscatter mode, or
transmitting the first signal on time domain resources for backscatter communication and time domain resources for active transmission communication, if the target transmission mode of the first signal is the backscatter mode.

16. The method according to claim 14, wherein the method further comprises:

transmitting the first signal on time domain resources for active transmission communication, if the target transmission mode of the first signal is the active transmission mode, or
transmitting the first signal on time domain resources for active transmission communication and time domain resources for backscatter communication, if the target transmission mode of the first signal is the active transmission mode.

17. The method according to any one of claims 3 to 13, wherein determining, by the first terminal according to the time domain feature of the transmitting time of the first signal, the target transmission mode of the first signal from the plurality of types of transmission modes comprises:
determining the target transmission mode of the first signal according to the time domain resource type corresponding to the transmitting time of the first signal in the first pattern and a size of remaining time domain resources with the time domain resource type after the transmitting time.

18. The method according to claim 17, wherein determining the target transmission mode of the first signal according to the time domain resource type corresponding to the transmitting time of the first signal in the first pattern and the size of the remaining time domain resources with the time domain resource type after the transmitting time comprises:

if the time domain resource type corresponding to the transmitting time of the first signal is time domain resources for backscatter communication, determining the target transmission mode of the first signal according to whether the size of remaining time domain resources for backscatter communication meets a backscatter communication duration required by the first signal; or
if the time domain resource type corresponding to the transmitting time of the first signal is time domain resources for active transmission communication, determining the target transmission mode of the first signal according to whether the size of the remaining time domain resources for active transmission communication meets an active transmission communication duration required by the first signal.

19. The method according to claim 18, wherein determining the target transmission mode of the first signal according to whether the size of the remaining time domain resources for backscatter communication meets the backscatter communication duration required by the first signal comprises:

determining to transmit the first signal using the backscatter mode, if the size of the remaining time domain resources for backscatter communication meets the backscatter communication duration of the first signal; or
determining to transmit the first signal using the active transmission mode, or determining to transmit the first signal using the backscatter mode and the active transmission mode, if the size of the remaining time domain resources for backscatter communication does not meet the backscatter communication duration of the first signal.

20. The method according to claim 18, wherein determining the target transmission mode of the first signal according to whether the size of the remaining time domain resources for active transmission communication meets the active transmission communication duration required by the first signal comprises:

determining to transmit the first signal in the active transmission mode, if the size of the remaining time domain resources for active transmission communication meets the active transmission communication duration of the first signal; or
determining to transmit the first signal in the backscatter mode, or determining to transmit the first signal in the active transmission and the backscatter mode, if the size of the remaining time domain resources for active transmission communication does not meet the active transmission communication duration of the first signal.

21. The method according to claim 1 or 2, wherein time domain resources for backscatter communication and time domain resources for active transmission communication are determined based on a switching time of transmission modes, and the switching time of transmission modes includes a switching time from the active transmission mode to the backscatter mode and/or a switching time from the backscatter mode to the active transmission mode.

22. The method according to claim 21, wherein determining, by the first terminal according to the time domain feature of the transmitting time of the first signal, the target transmission mode of the first signal from the plurality of types of transmission modes comprises:

determining a transmission mode corresponding to the transmitting time of the first signal according to transmission modes before and after the switching time; and
determining the transmission mode corresponding to the transmitting time as the target transmission mode of the first signal.

23. The method according to claim 21 or 22, wherein

the switching time is predefined, or
the switching time is configured by a network device, or
the switching time is configured by a target receiving device of the first signal.

24. The method according to any one of claims 21 to 23, wherein the switching time is periodic.

25. The method according to any one of claims 21 to 24, wherein a position of the switching time is fixed or variable.

26. The method according to claim 25, wherein a reference for determining the position of the switching time is a third time domain position.

27. The method according to claim 26, wherein

a start position of the switching time is the third time domain position, or
the start position of the switching time is a fourth time domain position, and the fourth time domain position has a second offset relative to the third time domain position.

28. The method according to claim 27, wherein

the second offset is predefined, or
the second offset is configured by a network device, or
the second offset is configured by a target receiving device of the first signal.

29. The method according to any one of claims 26 to 28, wherein

the third time domain position is a time domain position at which the first terminal receives scheduling information of the first signal; or
the third time domain position is a time domain position indicated by a target receiving device of the first signal or a network device.

30. The method according to claim 1 or 2, wherein time domain resources for backscatter communication and time domain resources for active transmission communication are determined based on a time window, the time window corresponds to a first transmission mode, and the first transmission mode is the active transmission mode or the backscatter mode.

31. The method according to claim 30, wherein the first transmission mode is the backscatter mode, time domain resources within the time window are used for backscatter communication, and time domain resources outside the time window are used for active transmission communication; or
the first transmission mode is the backscatter mode, time domain resources within the time window are used for the first terminal to initiate backscatter communication, and time domain resources outside the time window are used for active transmission communication and/or backscatter communication.

32. The method according to claim 30, wherein the first transmission mode is the active transmission mode, time domain resources within the time window are used for active transmission communication, and time domain resources outside the time window are used for backscatter communication; or
the first transmission mode is the active transmission mode, time domain resources within the time window are used for the first terminal to initiate active transmission communication, and time domain resources outside the time window are used for active transmission communication and/or backscatter communication.

33. The method according to any one of claims 30 to 32, wherein

the time window is predefined, or
the time window is configured by a network device, or
the time window is configured by a target receiving device of the first signal.

34. The method according to any one of claims 30 to 33, wherein the time window is periodic.

35. The method according to any one of claims 30 to 34, wherein a position of the time window is fixed or variable.

36. The method according to claim 35, wherein the position of the time window is determined according to first information, and the first information includes at least one of following:
a time length of the time window, a start position of the time window, an end position of the time window, an offset of the start position of the time window relative to a reference time domain position, an offset of the end position of the time window relative to a reference time domain position, period information of the time window, or a ratio of the time length of the time window to a period of the time window.

37. The method according to claim 36, wherein

the first information is predefined, or
the first information is configured by a network device, or
the first information is configured by a target receiving device of the first signal.

38. The method according to any one of claims 30 to 37, wherein determining, by the first terminal according to the time domain feature of the transmitting time of the first signal, the target transmission mode of the first signal from the plurality of types of transmission modes comprises:

determining to transmit the first signal using a first transmission mode, if the transmitting time of the first signal is within the time window; or
determining to transmit the first signal using a second transmission mode, if the transmitting time of the first signal is not within the time window, wherein the second transmission mode is different from the first transmission mode.

39. The method according to any one of claims 1 to 38, wherein determining, by the first terminal according to the time domain feature of the transmitting time of the first signal, the target transmission mode of the first signal from the plurality of types of transmission modes comprises:

in a case that a transmit power of backscatter signal meets a first condition and that the target transmission mode of the first signal determined according to the time domain feature of the transmitting time of the first signal is the backscatter mode, transmitting the first signal using the backscatter mode; or
in a case that the transmit power of the backscatter signal does not meet the first condition, transmitting the first signal using the active transmission mode; or
in a case that the transmit power of the backscatter signal does not meet the first condition, transmitting the first signal using the active transmission mode and the backscatter mode.

40. The method according to claim 39, wherein the first condition includes that:

the transmit power of the backscatter signal is greater than a sum of a target received power of a target receiving device and a path loss between the first terminal and the target receiving device; or
the transmit power of the backscatter signal is greater than or equal to the sum of the target received power of the target receiving device and the path loss between the first terminal and the target receiving device.

41. The method according to claim 39 or 40, wherein

the transmit power of the backscatter signal is determined according to a power of a carrier signal and a first gain, and the first gain is a gain of the transmit power of the backscatter signal relative to a power of the carrier signal; or
the transmit power of the backscatter signal is determined according to the power of the carrier signal, a loss caused by backscatter communication performed by the first terminal, and a second gain, and the second gain is a gain derived from backscatter communication performed by the first terminal.

42. The method according to claim 41, wherein the first gain includes at least one of following:
the loss caused by backscatter communication performed by the first terminal, an antenna gain of the first terminal, a low noise amplifier (LNA) gain of the first terminal, or a power-storage related gain of the first terminal.

43. The method according to claim 41, wherein the second gain includes at least one of following:
an antenna gain of the first terminal, an LNA gain of the first terminal, or a power-storage related gain of the first terminal.

44. The method according to claim 41 or 42, wherein the transmit power of the backscatter signal meets following formula:

$$P_{Backscatter} = P_{Carrier} + UE_{Gain1},$$

wherein $P_{Backscatter}$ denotes the transmit power of the backscatter signal, $P_{Carrier}$ denotes the power of the carrier signal, and $UE_{Gain1}$ denotes the first gain.

45. The method according to claim 41 or 43, wherein the transmit power of the backscatter signal meets following formula:

$$P_{Backscatter} = P_{Carrier} - UE_{Backscatter,loss} + UE_{Gain2}$$
,

wherein $P_{Backscatter}$ denotes the transmit power of the backscatter signal, $P_{Carrier}$ denotes the power of the carrier signal, $UE_{Gain2}$ denotes the second gain, and $UE_{Backscatter,loss}$ denotes the loss caused by backscatter communication performed by the first terminal.

46. The method according to any one of claims 41 to 45, wherein

the carrier signal is a signal used to carry scheduling information of the first signal; or
the carrier signal is a dedicated carrier signal.

47. The method according to any one of claims 1 to 46, wherein the transmitting time of the first signal is indicated by a network device or determined by the first terminal.

48. The method according to any one of claims 1 to 47, wherein the first terminal includes a first transmitter and a second transmitter, the first transmitter supports transmitting signals using the active transmission mode, and the second transmitter supports transmitting signals using backscatter transmission mode.

49. A wireless communication method, comprising:
determining, by a target receiving device according to a time domain feature of a receiving time of a first signal, a target receiving mode of the first signal from a plurality of types of receiving modes; wherein the plurality of types of receiving modes include a receiving mode corresponding to an active transmission mode and a receiving mode corresponding to a backscatter mode.

50. The method according to claim 49, wherein the time domain feature of the transmitting time of the first signal includes a time domain resource type corresponding to the transmitting time of the first signal.

51. The method according to claim 50, wherein time domain resources for backscatter communication and time domain resources for active transmission communication are distributed based on a first pattern.

52. The method according to claim 51, wherein

the first pattern is predefined; or
the first pattern is configured by a network device.

53. The method according to claim 51 or 52, wherein the first pattern is periodic.

54. The method according to any one of claims 51 to 53, wherein a position of the first pattern is fixed or variable.

55. The method according to claim 54, wherein a reference for determining the position of the first pattern is a first time domain position.

56. The method according to claim 55, wherein

a start position of the first pattern is a first time domain position, or
the start position of the first pattern is a second time domain position, and the second time domain position has a first offset relative to the first time domain position.

57. The method according to claim 55 or 56, wherein the first time domain position is a time domain position where scheduling information of the first signal is located.

58. The method according to claim 55 or 56, wherein the method further comprises:
transmitting, by the target receiving device, first indication information to a first terminal; wherein the first indication information is used for indicating the first time domain position.

59. The method according to claim 58, wherein the first indication information is carried in scheduling information of the first signal.

60. The method according to any one of claims 51 to 59, wherein the first pattern is represented by a first bitmap, the first bitmap includes a plurality of bit groups, each bit group includes one or more bits, each bit group corresponds to N time units, and a value of each bit group is used to indicate a resource type of corresponding N time units, wherein N is a positive integer.

61. The method according to claim 60, wherein

the value of each bit group is used to indicate that the corresponding N time units are time domain resources for backscatter communication, or time domain resources for active transmission communication, or flexible time domain resources; or
the value of each bit group is used to indicate whether the corresponding N time units are time domain resources for backscatter communication or time domain resources for active transmission communication.

62. The method according to any one of claims 51 to 61, wherein determining, by the target receiving device according to the time domain feature of the receiving time of the first signal, the target receiving mode of the first signal from the plurality of types of receiving modes comprises:
determining the target receiving mode of the first signal according to the time domain resource type corresponding to the receiving time of the first signal in the first pattern.

63. The method according to claim 62, wherein determining the target receiving mode of the first signal according to the time domain resource type corresponding to the receiving time of the first signal in the first pattern comprises:

determining that the target receiving mode of the first signal is the receiving mode corresponding to the backscatter mode, if the time domain resource type corresponding to the receiving time of the first signal in the first pattern is time domain resources for backscatter communication; or
determining that the target receiving mode of the first signal is the receiving mode corresponding to the active receiving mode, if the time domain resource type corresponding to the receiving time of the first signal in the first pattern is time domain resources for active transmission communication.

64. The method according to claim 63, wherein the method further comprises:

receiving the first signal on time domain resources for backscatter communication, if the target receiving mode of the first signal is the receiving mode corresponding to the backscatter mode; or
receiving the first signal on time domain resources for backscatter communication and time domain resources for active transmission communication, if the target receiving mode of the first signal is the receiving mode corresponding to the backscatter mode.

65. The method according to claim 63, wherein the method further comprises:

receiving the first signal on time domain resources for active transmission communication, if the target receiving mode of the first signal is the receiving mode corresponding to the active receiving mode; or
receiving the first signal on time domain resources for active transmission communication and time domain resources for backscatter communication, if the target receiving mode of the first signal is the receiving mode corresponding to the active receiving mode.

66. The method according to claim 49 or 50, wherein time domain resources for backscatter communication and time domain resources for active transmission communication are determined based on a switching time of transmission modes, and the switching time of transmission modes includes a switching time from the active transmission mode to the backscatter mode and/or a switching time from the backscatter mode to the active transmission mode.

67. The method according to claim 66, wherein determining, by the target receiving device according to the time domain feature of the receiving time of the first signal, the target receiving mode of the first signal from the plurality of types of receiving modes comprises:

determining a target transmission mode corresponding to the receiving time of the first signal according to transmission modes before and after the switching time; and
determining the receiving mode corresponding to the target transmission mode as the target receiving mode of the first signal.

68. The method according to claim 67, wherein the switching time is periodic.

69. The method according to claim 67 or 68, wherein a position of the switching time is fixed or variable.

70. The method according to claim 69, wherein a reference for determining the position of the switching time is a third time domain position.

71. The method according to claim 70, wherein

a start position of the switching time is the third time domain position; or
the start position of the switching time is a fourth time domain position, and the fourth time domain position has a second offset relative to the third time domain position.

72. The method according to claim 70 or 71, wherein the third time domain position is a time domain position where scheduling information of the first signal is located.

73. The method according to claim 70 or 71, wherein the method further comprises:
transmitting, by the target receiving device, second indication information to a first terminal; wherein the second indication information is used for indicating the third time domain position.

74. The method according to claim 73, wherein the second indication information is carried in scheduling information of the first signal.

75. The method according to claim 49 or 50, wherein time domain resources for backscatter communication and time domain resources for active transmission communication are determined based on a time window, the time window corresponds to a first transmission mode, and the first transmission mode is the active transmission mode or the backscatter mode.

76. The method according to claim 75, wherein the first transmission mode is the backscatter mode, time domain resources within the time window are used for backscatter communication, and time domain resources outside the time window are used for active transmission communication; or
the first transmission mode is the backscatter mode, time domain resources within the time window are used for the first terminal to initiate backscatter communication, and time domain resources outside the time window are used for active transmission communication and/or backscatter communication.

77. The method according to claim 75, wherein the first transmission mode is the active transmission mode, time domain resources within the time window are used for active transmission communication, and time domain resources outside the time window are used for backscatter communication; or
the first transmission mode is the active transmission mode, time domain resources within the time window are used for the first terminal to initiate active transmission communication, and time domain resources outside the time window are used for active transmission communication and/or backscatter communication.

78. The method according to any one of claims 75 to 77, wherein

the time window is predefined; or
the time window is configured by a network device.

79. The method according to any one of claims 75 to 78, wherein the time window is periodic.

80. The method according to any one of claims 75 to 79, wherein a position of the time window is fixed or variable.

81. The method according to any one of claims 74 to 80, wherein the position of the time window is determined according to first information, and the first information includes at least one of the following:
a time length of the time window, a start position of the time window, an end position of the time window, an offset of the start position of the time window relative to a reference time domain position, an offset of the end position of the time window relative to a reference time domain position, period information of the time window, or a ratio of the time length of the time window to a period of the time window.

82. The method according to any one of claims 75 to 81, wherein determining, by the target receiving device according to the time domain feature of the receiving time of the first signal, the target receiving mode of the first signal from the plurality of type of receiving modes comprises:

determining that the target receiving mode of the first signal is a receiving mode corresponding to the first transmission mode, if the receiving time of the first signal is within the time window; or
determining that the target receiving mode of the first signal is a receiving mode corresponding to a second transmission mode, if the receiving time of the first signal is not within the time window; wherein the second transmission mode is different from the first transmission mode.

83. A terminal device, comprising:
a processing unit, configured to determine a target transmission mode of a first signal from a plurality of types of transmission modes according to a time domain feature of a transmitting time of the first signal; wherein the plurality of types of transmission modes include an active transmission mode and a backscatter mode.

84. A communication device, comprising:
a processing unit, configured to determine a target receiving mode of a first signal from a plurality of type of receiving modes according to a time domain feature of a receiving time of the first signal; wherein the plurality of receiving modes include a receiving mode corresponding to an active transmission mode and a receiving mode corresponding to a backscatter mode.

85. A terminal device, comprising: a processor and a memory, wherein the memory is configured to store a computer program, and the processor is configured to invoke and run the computer program stored in the memory to perform the method according to any one of claims 1 to 48.

86. A communication device, comprising: a processor and a memory, wherein the memory is configured to store a computer program, and the processor is configured to invoke and run the computer program stored in the memory to perform the method according to any one of claims 49 to 82.

87. A chip, comprising: a processor configured to invoke and run a computer program from a memory, to cause a device equipped with the chip to perform the method according to any one of claims 1 to 48, or the method according to any one of claims 49 to 82.

88. A computer-readable storage medium, configured to store a computer program, wherein the computer program causes a computer to perform the method according any one of claims 1 to 48, or the method according to any one of claims 49 to 82.

89. A computer program product, comprising computer program instructions, wherein the computer program instructions cause a computer to perform the method according to any one of claims 1 to 48, or the method according to any one of claims 49 to 82.

90. A computer program, wherein the computer program causes a computer to perform the method according to any one of claims 1 to 48, or the method according to any one of 49 to 82.

**100**

FIG. 1

Power supply/trigger

Backscatter communication

Network device

Zero-power consumption terminal

Power harvesting module

Backscatter communication module

Low-power conumption computing module

Sensor module

FIG. 2

EP 4 580 225 A1

FIG. 3

FIG. 4

FIG. 5

200

A first terminal determines, according to a time domain feature of a transmitting time of a first signal, a target transmission mode of the first signal from a plurality of types of transmission modes; where the plurality of types of transmission modes include an active transmission mode and a backscatter mode

S210

FIG. 6

EP 4 580 225 A1

Backscatter communication time domain resources

Active communication time domain resources

Pattern period

Time

FIG. 7

Backscatter communication time domain resources

Active communication time domain resources

Pattern period

Time

FIG. 8

Scheduling information => UE1

Start position of the pattern for UE1

Offset 1

Time

Scheduling information => UE2

Start position of the pattern for UE2

Offset 2

Time

FIG. 9

49

Backscatter communication time domain resources
Active communication time domain resources

Transmitting time of the first signal
Transmitting time of the first signal
Transmitting time of the first signal

Backscatter mode
Active transmission mode
Backscatter mode

Time

FIG. 10

Backscatter communication time domain resources
Active communication time domain resources

Transmitting time of the first signal
Start position of the first signal
Transmitting time of the first signal
Insufficient resources

Backscatter mode
Active transmission mode
Active transmission mode

Time

FIG. 11

First transmission mode
Second transmission mode

Switching time T
Switching time T

Period of the switching time

Time

FIG. 12

FIG. 13

FIG. 14

FIG. 15

First-type
terminal #2

First-type
terminal #1

Supplying
power only

triggering

Actively
transmitting

Supplying
power/triggering

Back
scattering

Supplying
power/triggering

Second-type
terminal

Back scaterring

Back
scattering — — ► Supplying
power ∿∿∿ Triggering ┈┈┈► Actively
transmitting ➤

FIG. 16

300          S310

The target receiving device determines, according to a time domain feature of a
receiving time of a first signal, a target receiving mode of the first signal from a
plurality of types of receiving modes; where the plurality types of receiving modes
include a receiving mode corresponding to an active transmission mode and a
receiving mode corresponding to a backscatter mode

FIG. 17

Terminal device 400

Processing unit 410

FIG. 18

Communication device 500

Processing unit 510

FIG. 19

Communication device 600

Memory 620

Processor 610

Transceiver 630

FIG. 20

Chip700

Input interface 730

Processor 710

Memory 720

Output interface 740

FIG. 21

Communication system 900

First terminal    910

Target receiving device    920

FIG. 22

## INTERNATIONAL SEARCH REPORT

| International application No. |
|---|
| **PCT/CN2022/114029** |

| A. | CLASSIFICATION OF SUBJECT MATTER |
|---|---|
| | H04W4/70(2018.01)i;H04W72/04(2023.01)i;H04L67/12(2022.01)i |

According to International Patent Classification (IPC) or to both national classification and IPC

| B. | FIELDS SEARCHED |
|---|---|

Minimum documentation searched (classification system followed by classification symbols)

　IPC:H04W H04B

Documentation searched other than minimum documentation to the extent that such documents are included in the fields searched

Electronic data base consulted during the international search (name of data base and, where practicable, search terms used)

　3GPP, CNTXT, CNKI, VEN, ENTXT: 背散射, 背向散射, 反向散射, 方式, 模式, 确定, 时域, 图样, 主动传输, 主动发射, 资源, backscatter+, manner, mode, determine, time doumain, pattern, positive, active, transmission, transmit+, resource

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111343216 A (SHENZHEN INSTITUTE OF ADVANCED TECHNOLOGY) 26 June 2020 (2020-06-26)<br>description, paragraphs 35-137, and figures 1-10 | 1-90 |
| A | CN 114205868 A (HUAZHONG UNIVERSITY OF SCIENCE AND TECHNOLOGY) 18 March 2022 (2022-03-18)<br>entire document | 1-90 |
| A | CN 113922937 A (CHINA ACADEMY OF INFORMATION AND COMMUNICATIONS TECHNOLOGY) 11 January 2022 (2022-01-11)<br>entire document | 1-90 |
| A | WO 2022169732 A1 (IDAC HOLDINGS, INC.) 11 August 2022 (2022-08-11)<br>entire document | 1-90 |
| A | WO 2021253307 A1 (QUALCOMM INC. et al.) 23 December 2021 (2021-12-23)<br>entire document | 1-90 |
| A | US 2003104848 A1 (SYMBOL TECHNOLOGIES INC.) 05 June 2003 (2003-06-05)<br>entire document | 1-90 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 May 2023** | **06 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2022/114029** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2001050922 A1 (MARK IV INDUSTRIES LIMITED) 13 December 2001 (2001-12-13) entire document | 1-90 |

Form PCT/ISA/210 (second sheet) (July 2022)

**INTERNATIONAL SEARCH REPORT**
Information on patent family members

International application No.

**PCT/CN2022/114029**

| Patent document cited in search report | | | Publication date (day/month/year) | Patent family member(s) | | | Publication date (day/month/year) |
|---|---|---|---|---|---|---|---|
| CN | 111343216 | A | 26 June 2020 | None | | | |
| CN | 114205868 | A | 18 March 2022 | None | | | |
| CN | 113922937 | A | 11 January 2022 | None | | | |
| WO | 2022169732 | A1 | 11 August 2022 | None | | | |
| WO | 2021253307 | A1 | 23 December 2021 | None | | | |
| US | 2003104848 | A1 | 05 June 2003 | US | 7215976 | B2 | 08 May 2007 |
| US | 2001050922 | A1 | 13 December 2001 | CA | 2307361 | A1 | 01 November 2001 |
| | | | | CA | 2307361 | C | 08 April 2008 |
| | | | | US | 2006109085 | A1 | 25 May 2006 |
| | | | | US | 7016311 | B2 | 21 March 2006 |

Form PCT/ISA/210 (patent family annex) (July 2022)